(19) Europäisches Patentamt
European Patent Office
Office européen des brevets

(11) **EP 4 440 227 A1**

(12) **EUROPEAN PATENT APPLICATION**
published in accordance with Art. 153(4) EPC

(43) Date of publication:
**02.10.2024 Bulletin 2024/40**

(21) Application number: **22895009.3**

(22) Date of filing: **22.11.2022**

(51) International Patent Classification (IPC):
**H04W 74/00** $^{(2009.01)}$

(52) Cooperative Patent Classification (CPC):
**H04W 74/00; H04W 74/08**

(86) International application number:
**PCT/CN2022/133442**

(87) International publication number:
**WO 2023/088480 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.11.2021 CN 202111389712**

(71) Applicant: **VIVO MOBILE COMMUNICATION CO., LTD.**
**Dongguan, Guangdong 523863 (CN)**

(72) Inventors:
• **YANG, Yuming**
**Dongguan, Guangdong 523863 (CN)**
• **WANG, Huan**
**Dongguan, Guangdong 523863 (CN)**
• **PENG, Shuyan**
**Dongguan, Guangdong 523863 (CN)**
• **LIU, Siqi**
**Dongguan, Guangdong 523863 (CN)**
• **JI, Zichao**
**Dongguan, Guangdong 523863 (CN)**

(74) Representative: **Lavoix**
**Bayerstraße 83**
**80335 München (DE)**

(54) **SIDELINK RESOURCE DETERMINATION METHOD AND TERMINAL**

(57) This application discloses a sidelink resource determining method and a terminal, belonging to the field of communication technologies. The sidelink resource determining method according to embodiments of this application includes: A first terminal determines a first physical sidelink feedback channel PSFCH resource and/or a first physical sidelink shared channel PSSCH resource; and/or the first terminal sends first information, where the first information is used to indicate the first PSFCH resource.

A first terminal determines a first physical sidelink feedback channel PSFCH resource and/or a first physical sidelink shared channel PSSCH resource; and/or the first terminal sends first information, where the first information is used to indicate the first PSFCH resource

101

**FIG. 3**

EP 4 440 227 A1

**Description**

**CROSS-REFERENCE TO RELATED APPLICATIONS**

This application claims priority to Chinese Patent Application No. 202111389712.3, filed on November 22, 2021 and entitled "SIDELINK RESOURCE DETERMINING METHOD, TERMINAL, AND NETWORK SIDE DEVICE", which is incorporated herein by reference in its entirety.

**TECHNICAL FIELD**

This application belongs to the field of communication technologies, and in particular, to a sidelink resource determining method and a terminal.

**BACKGROUND**

A long term evolution (Long Term Evolution, LTE) system supports sidelink (sidelink, SL) transmission, that is, data transmission between terminals is directly performed at a physical layer. In an LTE SL, communication is performed based on broadcasting. Although the LTE SL can be used to support basic security communication of vehicle to everything (vehicle to everything, V2X), but is not suitable for another more advanced V2X service. A 5G new radio (New Radio, NR) system supports a more advanced SL transmission design, for example, unicast, multicast, or groupcast, to support more comprehensive service types.

In the LTE SL, a terminal does not support retransmission based on hybrid automatic repeat request (Hybrid Automatic Repeat Request, HARQ) HARQ feedback, but only supports at most one blind retransmission to enhance reliability. In an NR SL, a terminal transmits, on one or more sub-channels (sub-channel) as a response to receiving of a physical sidelink shared channel (Physical Sidelink Shared Channel, PSSCH), a physical sidelink feedback channel (Physical Sidelink Feedback Channel, PSFCH) carrying HARQ-ACK information. NR data is not transmitted on a PSFCH resource. Therefore, data transmission of an NR terminal does not collide with sending/receiving of the PSFCH. However, in a scenario in which the LTE SL and the NR SL coexist in a same frequency, because an LTE terminal does not support HARQ feedback, if an NR enables retransmission based on HARQ feedback, sending/receiving of the PSFCH of the NR terminal may collide with data of the LTE terminal, and sending/receiving of the PSFCH of the NR terminal may be affected by the data sent by the LTE terminal. Therefore, how to avoid a conflict between sending/receiving of the PSFCH of the NR terminal and data transmission of the LTE terminal is an urgent technical problem to be resolved by technicians in this field.

**SUMMARY**

Embodiments of this application provide a sidelink resource determining method and a terminal, which can resolve a conflict between PSFCH sending/receiving of an NR terminal and data sending of an LTE terminal.

According to a first aspect, a sidelink resource determining method is provided, and the method includes:

A first terminal determines a first physical sidelink feedback channel PSFCH resource and/or a first physical sidelink shared channel PSSCH resource; and/or
the first terminal sends first information, where the first information is used to indicate the first PSFCH resource.

According to a second aspect, a sidelink resource determining method is provided, and the method includes:

A second terminal obtains first information, where the first information is sent by a first terminal, and the first information is used to indicate a target resource; and
the second terminal excludes the target resource from target candidate resources based on the target resource indicated by the first information.

According to a third aspect, a sidelink resource determining apparatus is provided, including:

a processing module, configured to determine a first physical sidelink feedback channel PSFCH resource and/or a first physical sidelink shared channel PSSCH resource; and/or
a transmitting module, configured to send first information, where the first information is used to indicate the first PSFCH resource.

According to a fourth aspect, a sidelink resource determining apparatus is provided, including:

an obtaining module, configured to obtain first information, where the first information is sent by a first terminal, and the first information is used to indicate a target resource; and

a processing module, configured to exclude the target resource from target candidate resources based on the target resource indicated by the first information.

According to a fifth aspect, a first terminal is provided. The first terminal includes a memory and a processor. The memory stores programs or instructions that are capable of being run on the processor, and when the programs or instructions are executed by the processor, the steps of the method according to the first aspect are implemented.

According to a sixth aspect, a first terminal is provided, including a processor and a communication interface. The processor is configured to determine a first physical sidelink feedback channel PSFCH resource, and/or the communication interface is configured to send first information. The first information is used to indicate the first PSFCH resource.

According to a seventh aspect, a second terminal is provided. The second terminal includes a memory and a processor. The memory stores programs or instructions that are capable of being run on the processor, and when the programs or instructions are executed by the processor, the steps of the method according to the second aspect are implemented.

According to an eighth aspect, a second terminal is provided, including a processor and a communication interface. The communication interface is configured to obtain first information. The first information is sent by a first terminal, and the first information is used to indicate a target resource. The processor is configured to exclude the target resource from target candidate resources based on the target resource indicated by the first information.

According to a ninth aspect, a communication system is provided, including: a first terminal and a second terminal. The first terminal may be configured to perform the steps of the sidelink resource determining method according to the first aspect, and the second terminal may be configured to perform the steps of the sidelink resource determining method according to the second aspect.

According to a tenth aspect, a readable storage medium is provided. The readable storage medium stores programs or instructions, and when the programs or instructions are executed by a processor, the steps of the method according to the first aspect are implemented, or the steps of the method according to the second aspect are implemented.

According to an eleventh aspect, a chip is provided. The chip includes a processor and a communication interface. The communication interface is coupled to the processor, and the processor is configured to run a program or instructions, to implement the method according to the first aspect, or implement the method according to the second aspect.

According to a twelfth aspect, a computer program/program product is provided. The computer program/program product is stored in a storage medium. The computer program/program product is executed by at least one processor, to implement the steps of the sidelink resource determining method according to the first aspect, or implement the steps of the sidelink resource determining method according to the second aspect.

In embodiments of this application, the first terminal determines the first physical sidelink feedback channel PSFCH resource and/or the first physical sidelink shared channel PSSCH resource, to avoid a resource occupied or reserved by another terminal, so as to avoid a resource conflict; and/or the first terminal sends the first information, and the first information is used to indicate the first PSFCH resource, so that when receiving the first information, the second terminal may perform resource selection based on the resource indicated by the first information, to avoid a conflict with the resource indicated by the first information.

## BRIEF DESCRIPTION OF THE DRAWINGS

FIG. 1 is a diagram of a structure of a wireless communication system applicable to an embodiment of this application;

FIG. 2 is a schematic diagram of a sidelink application scenario according to an embodiment of this application;

FIG. 3 is a schematic flowchart 1 of a sidelink resource determining method according to an embodiment of this application;

FIG. 4 is a schematic diagram of a PSFCH resource for a sidelink resource determining method according to an embodiment of this application;

Fig. 5 is a schematic diagram of a resource detection window and a resource selection window according to an embodiment of this application;

FIG. 6 is a schematic flowchart 2 of a sidelink resource determining method according to an embodiment of this application;

FIG. 7 is a schematic flowchart 3 of a sidelink resource determining method according to an embodiment of this application;

FIG. 8 is a schematic flowchart 4 of a sidelink resource determining method according to an embodiment of this application;

FIG. 9 is an interaction flowchart of a sidelink resource determining method according to an embodiment of this application;

FIG. 10 is a schematic flowchart 2 of a sidelink resource determining method according to an embodiment of this application;

FIG. 11 is a schematic diagram 1 of a structure of a sidelink resource determining apparatus according to an embodiment of this application;

FIG. 12 is a schematic diagram 2 of a structure of a sidelink resource determining apparatus according to an embodiment of this application;

FIG. 13 is a schematic diagram of a structure of a communication device according to an embodiment of this application; and

FIG. 14 is a schematic diagram of a hardware structure of a terminal according to an embodiment of this application.

## DETAILED DESCRIPTION

The following describes the technical solutions in embodiments of this application with reference to the accompanying drawings in embodiments of this application. It is clear that the described embodiments are a part rather than all of embodiments of this application. All other embodiments obtained by persons of ordinary skill in the art based on embodiments of this application shall fall within the protection scope of this application.

In the specification and claims of this application, the terms "first", "second", and the like are intended to distinguish between similar objects but do not necessarily indicate a specific order or sequence. It may be understood that the terms used in this way are interchangeable in an appropriate case, so that embodiments of this application may be implemented in a sequence other than those illustrated or described herein, and that the objects distinguished by "first" and "second" are usually of one type and a quantity of objects is not limited, for example, there may be one first object or a plurality of first objects. In addition, "and/or" used in this specification and the claims indicates at least one of connected objects. The character "/" generally indicates an "or" relationship between associated objects.

It is worth noting that, in addition to a long term evolution (Long Term Evolution, LTE)/LTE-advanced (LTE-Advanced, LTE-A) system, the technologies described in embodiments of this application may further be used in various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. The terms "system" and "network" in embodiments of this application are usually used interchangeably. The described technologies can be used in the systems and radio technologies mentioned above, and can also be used in other systems and radio technologies. The following describes a New Radio (new radio, NR) system for example purposes and uses NR terms in most of the following descriptions, but these technologies may also be used in applications other than NR system applications, such as a 6th generation (6th Generation, 6G) communication system.

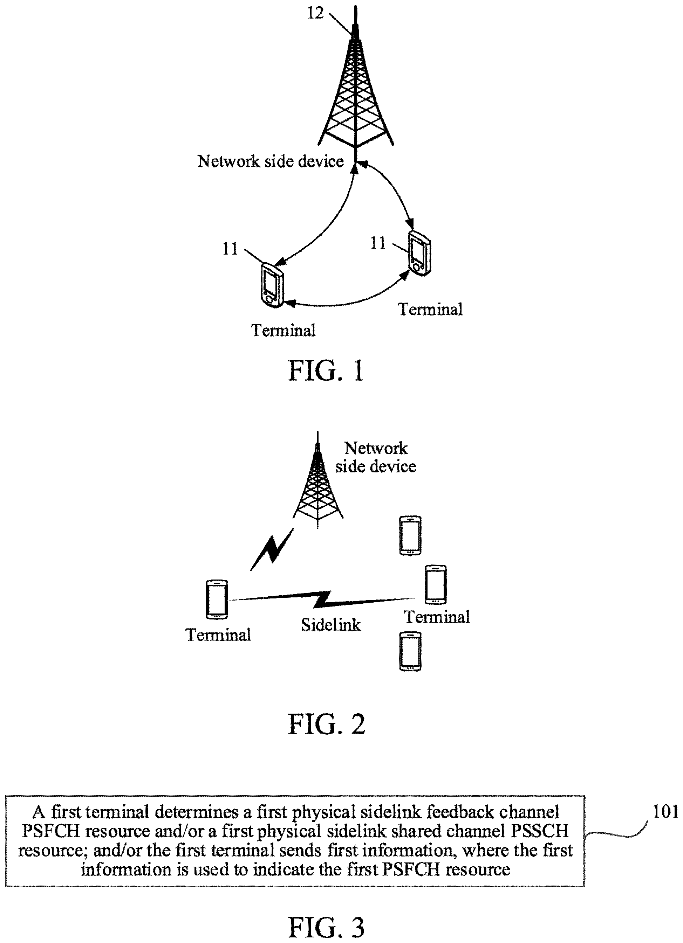

FIG. 1 is a block diagram of a wireless communication system applicable to an embodiment of this application. The wireless communication system includes a terminal 11 and a network side device 12. The terminal 11 may be a terminal side device, for example, a mobile phone, a tablet personal computer (Tablet Personal Computer), a laptop computer (Laptop Computer) or also referred to as a notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle-mounted user equipment (VUE), pedestrian user equipment (PUE), a smart home (a home device with a wireless communication function, for example, a refrigerator, a television, a washing machine, or a furniture), a game console, a personal computer (personal computer, PC), a teller machine, or a self-service machine. The wearable device includes: a smartwatch, a smartband, a smart headset, smart glasses, smart jewelry (a smart wristlet, a smart bracelet, a smart ring, a smart necklace, a smart anklet, and the like), a smart wristband, smart clothing, and the like. It should be noted that a specific type of the terminal 11 is not limited in embodiments of this application. The network side device 12 may include an access network device or a core network device. An access network device 12 may also be referred to as a radio access network device, a radio access network (Radio Access Network, RAN), a radio access network function, or a radio access network unit. The access network device 12 may include a base station, a WLAN access point, a Wi-Fi node, and the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmitting receiving point (Transmitting Receiving Point, TRP), or another suitable term in the art. The base station is not limited to a specific technical term as long as the same technical effect is achieved It should be noted that, in embodiments of this application, only a base station in an NR system is used as an example, but a specific type of the base station is not limited.

In NR V2X, two resource allocation modes are defined, one resource allocation mode is a mode 1, for scheduling a resource for the base station, the other resource allocation mode is a mode 2, and the terminal decides a resource used for transmission. In this case, resource information may be from a broadcast message or preconfigured information of the base station. If the terminal works within a range of the base station and has an RRC connection with the base station, the terminal can work in the mode 1 and/or the mode 2. If the terminal works within a range of the base station but has no RRC connection with the base station, the terminal can work in only in the mode 2 If the terminal is outside the range of the base station, the terminal can work in only in the mode 2, and perform V2X transmission based on the preconfigured information.

For the mode 2, resource selection based on sensing (sensing) is supported. Specific working manners are as follows. (1) After resource selection is triggered, a transmitting TX terminal first determines a resource selection window, a lower boundary of the resource selection window is at a $T_1$ time after resource selection is triggered, and an upper boundary of resource selection is at a $T_2$ Time after resource selection is triggered, where $T_2$ is a value selected by the terminal within a packet delay budget (packet delay budget, PDB) of transmission of a transport block (TB, Transport Block), and $T_2$ is not earlier than $T_1$. (2) Before resource selection, the terminal needs to determine a candidate resource set (candidate resource set) of resource selection, and compare an RSRP measured on a resource in the resource selection window with a corresponding RSRP threshold. If the RSRP is lower than the RSRP threshold, the resource can be included in the candidate resource set. (3) After the resource set is determined, the terminal randomly selects a transmission resource from the candidate resource set. In addition, the terminal can reserve a transmission resource for next transmission in this transmission.

In the mode 2 resource allocation mode, a re-evaluation mechanism of resource selection is supported, and the mechanism is briefly described as follows: To determine whether a selected but not reserved resource (PSCCH/PSSCH resource) is still in an idle/low interference state, the terminal performs re-evaluation of resource selection at least at a 'm-$T_3$' moment, where a 'm' moment is a moment at which reservation information of the resource is sent for the first time, and $T_3$ includes at least duration of resource selection processing by UE. The terminal performs a step of resource selection again at least at the 'm-$T_3$' moment, to obtain the candidate resource set. If the resource selected by the terminal is still in the candidate resource set, the terminal does not need perform resource reselection. Otherwise, the terminal selects a new transmission resource in the candidate resource set.

In the mode 2 resource allocation mode, a resource preemption (preemption) mechanism of resource selection is supported, and the mechanism is briefly described as follows: Resources reserved by a terminal overlap (partially overlap) resources reserved/selected by another terminal with a higher priority service. If an SL-RSRP measurement value of the terminal on a related resource is greater than a specific related SL-RSRP threshold, the terminal may trigger resource reselection.

To determine whether the reserved resource (PSCCH/PSSCH resource) is preempted, the UE performs preemption detection at least at the 'm-$T_3$' moment, where the 'm' moment is a moment at which the resource is located or the reservation information of the resource is sent, and $T_3$ includes at least duration of resource selection processing by the UE. The UE performs a step of resource selection again at least at the 'm-$T_3$' moment, to obtain the candidate resource set. If the resource selected by the terminal is still in the candidate resource set, the terminal does not need perform resource reselection. Otherwise, the terminal selects a new transmission resource in the candidate resource set.

In an LTE SL, the terminal does not support retransmission based on HARQ feedback, but only supports at most one blind retransmission to enhance reliability. In the R16/R17, an NR terminal transmits, on one or more sub-channels as a response to receiving of a PSSCH, a PSFCH carrying HARQ-ACK information. The PSFCH of the NR terminal may be transmitted at a configured location. NR data is not transmitted on a PSFCH resource. Therefore, data transmission of the NR terminal does not collide with sending/receiving of the PSFCH. However, in a scenario in which the LTE SL and an NR SL coexist in a same frequency, because an LTE terminal does not support HARQ feedback, if an NR enables retransmission based on HARQ feedback, sending/receiving of the PSFCH of the NR terminal may collide with data of the LTE terminal, and sending/receiving of the PSFCH of the NR terminal may be affected by the data sent by the LTE terminal. Therefore, it is necessary to consider how to avoid a conflict between sending/receiving of the PSFCH of the NR terminal and the data sent by the LTE terminal.

Table 1 LTE PSCCH SCI format 1

| Type | Number of bits |
|------|----------------|
| Priority | 3 |

(continued)

| Type | Number of bits |
|------|----------------|
| Resource reservation | 4 |
| Frequency resource location of initial transmission and retransmission | $\left\lceil \log_2(N_{\text{subchannel}}^{\text{SL}}(N_{\text{subchannel}}^{\text{SL}}+1)/2) \right\rceil$ |
| Time gap between initial transmission and retransmission | 4 |
| Reserved period | Indeterminate |
| MCS | 5 |
| Retransmission indication | 1 |
| Transmission format | 1 |
| Reserved bit | Added until the size is equal to 32 bits |

A sidelink resource determination method according to embodiments of this application may be described in detail with reference to the accompanying drawings through some embodiments and application scenarios thereof.

In an embodiment, the method according to embodiments of this application can be applied to a scenario shown in FIG. 2.

In the following embodiments, an example in which a first terminal is an NR terminal and a second terminal is an LTE terminal is used for description.

FIG. 3 is a schematic flowchart 1 of a sidelink resource determining method according to an embodiment of this application. As shown in FIG. 3, the sidelink resource determining method according to an embodiment of this application includes:

Step 101: A first terminal determines a first physical sidelink feedback channel PSFCH resource and/or a first physical sidelink shared channel PSSCH resource; and/or

the first terminal sends first information, where the first information is used to indicate the first PSFCH resource.

The PSFCH resource is a time-frequency domain resource on which a PSFCH occasion (occasion) is located.

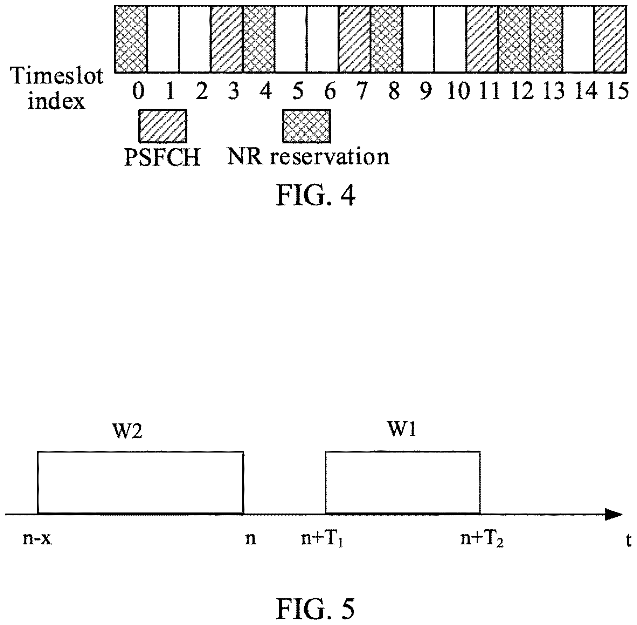

Specifically, as shown in FIG. 4, for example, when a resource pool configures a PSFCH period to be N=4, the first terminal may send a PSFCH feedback at a latest PSFCH occasion that meets a time tap requirement. The first terminal can avoid a PSFCH resource location in the PSFCH occasion based on a configuration of the resource pool, to avoid a conflict between data and feedback information at a corresponding location. However, a second terminal does not enable a retransmission mechanism based on HARQ feedback. Therefore, if the second terminal does not avoid the PSFCH resource location of the first terminal by using a specific mechanism, a conflict between data and feedback information on a corresponding symbol may be caused. In this case, overall performance of a system may be affected.

A manner is: The first terminal may send the first information indicating the first PSFCH resource. After obtaining the first information, the second terminal may learn the resource indicated by the first information. The resource may be defined as a target resource. The second terminal may exclude the target resource when performing resource selection, to avoid a resource conflict. Alternatively, the first information sent by the first terminal indicates a location, and the location is a time-frequency domain resource location at which the PSFCH occasion predefined in a protocol or preconfigured by a network side is located. After obtaining the first information, the second terminal may learn the resource indicated by the first information. The resource may be defined as a target resource. The second terminal may exclude the target resource when performing resource selection, to avoid a resource conflict.

If the first terminal is used as a data transmitting terminal, the first information may be used to indicate a sending location of a PSFCH of a receiving terminal, and it is expected that another terminal can avoid the PSFCH occasion when performing resource selection. Alternatively, the first terminal is used as a receiving terminal, and uses the first information to indicate a sending location of a PSFCH selected by the first terminal, and it is expected that another terminal can avoid the PSFCH occasion when performing resource selection.

Optionally, the first information may be indicated by a retransmission indicator field. In this case, after receiving the first information, the second terminal may consider the target resource as a retransmission resource reserved by another terminal. Therefore, the target resource is excluded during resource selection, to avoid a resource conflict.

Another manner is: The first terminal may avoid a resource used or reserved by another terminal when determining the first PSFCH resource and/or the first PSSCH resource, to avoid a resource conflict.

Optionally, the first terminal performs resource detection when determining the first PSFCH resource and/or the first PSSCH resource, to avoid a resource used or reserved by another terminal.

As shown in FIG. 5, assuming that W1 is a resource selection window and W2 is a resource detection window, the first terminal may perform resource exclusion based on a detection condition of a resource in the resource detection window, and then determine the first PSFCH resource and/or the first PSSCH resource.

Optionally, the first information is indicated by a time gap between initial transmission and retransmission indicator field.

Specifically, based on a principle that each of the first terminal and the second terminal may indicate a retransmission resource when sending an SCI format 1 during co-frequency coexistence, a retransmission indicator field in the SCI format 1, for example, the indicator field of the time gap between initial transmission and retransmission in Table 1, may be used to indicate the first PSFCH resource, so that the second terminal can avoid the resource.

For example, as shown in FIG. 5, the first terminal whose initial transmission resource is located in a specific PSFCH period indicates a PSFCH resource location of this PSFCH period or PSFCH resource locations of next N periods by using the retransmission indicator field. Because the first terminal sends the retransmission indicator field when sending data, the PSFCH resource location is indicated by a retransmission indicator of the first terminal, so that the second terminal not only excludes a reserved resource of the first terminal, but also excludes a PSFCH resource of each period when performing resource selection, to avoid a conflict between data sent by the second terminal and feedback information sent by the first terminal.

According to the method in embodiments, the first terminal determines the first physical sidelink feedback channel PSFCH resource and/or the first physical sidelink shared channel PSSCH resource, to avoid a resource occupied or reserved by another terminal; and/or the first terminal sends the first information, and the first information is used to indicate the first PSFCH resource, so that when receiving the first information, the second terminal may perform resource selection based on the resource indicated by the first information, to avoid a conflict with the resource indicated by the first information.

Optionally, the first information is used to indicate at least one of the following:

a PSFCH period;
a time-frequency domain location of a PSFCH resource; and
a time-frequency domain size of the PSFCH resource.

In an embodiment, a PSFCH sending or receiving location indicated by the first information meets at least one of the following:

the PSFCH sending location is a PSFCH sending location of a period closest to a current transmission time;
the PSFCH receiving location is a PSFCH receiving location of a period closest to a current transmission time;
the PSFCH sending location is a PSFCH sending location of a closest period with a gap greater than a duration threshold from the current transmission time;
the PSFCH receiving location is a PSFCH receiving location of a closest period with a gap greater than a duration threshold from the current transmission time;
the PSFCH sending location is a PSFCH sending location of a random period in a range indicated by the first information; and
the PSFCH receiving location is a PSFCH receiving location of a random period in a range indicated by the first information.

Specifically, the PSFCH sending location is a PSFCH sending location of the period closest to the current transmission time;

the PSFCH sending location is a PSFCH sending location of the closest period with a gap greater than a duration threshold from the current transmission time; and
the PSFCH sending location is a PSFCH sending location of a random period (within a range indicated by the first information), namely, a PSFCH sending location of any period within the range indicated by the first information.

The receiving location is similar to the sending location. Details are not described herein again.

Optionally, the duration threshold may be a PSFCH sending and processing time and/or a PSFCH data processing time. The PSFCH sending and processing time is a time from receiving a data packet to processing the data packet. The PSFCH data processing time is a preparation time for sending a PSFCH after processing the data packet.

Optionally, the PSFCH sending location or receiving location is determined by a PSFCH period or the start location.

Further, the PSFCH period or the start location is indicated by at least one of the following:

predefining in the protocol, preconfiguring by the network side device, configuring by the network side device, preconfiguring by the first terminal, or configuring by the first terminal; or indicating by the radio resource control RRC, indicating by the media access layer control unit MAC CE, indicating by the downlink control information DCI, or indicating by the sidelink control information SCI.

In an embodiment, in a case that a current transmission time domain location is located at a periodically configured PSFCH sending or receiving location, configuration is performed according to at least one of the following:

> configuring a retransmission index indicator field as a first preset value;
> configuring a time gap between initial transmission and retransmission indicator field as a first preset value; and
> configuring a time gap between initial transmission and retransmission indicator field as a PSFCH period.

Specifically, the retransmission index indicator field may be a retransmission index indicator field, and the first default value is 0.

The indicator field of the time gap between initial transmission and retransmission may be a time gap between initial transmission and retransmission indicator field.

Optionally, the first information is information carried in initial transmission SCI.

Optionally, when an NDI field in the SCI is flipped, it means that a current transmission is a new transmission, and when the NDI field in the SCI not flipped, it means that the current transmission is a retransmission.

In an embodiment, a PSFCH sending location and/or a PSFCH receiving location are dynamically indicated by the first terminal, and at least one of the following is met:

> the PSFCH sending location is indicated by a time gap between initial transmission and retransmission indicator field; and
> dynamically indicated content is a first time domain offset value of the PSFCH sending location or the PSFCH receiving location relative to a target time unit. The target time unit includes at least one of the following: a current time unit or a time unit in which the first information is located.

Specifically, in an embodiment, because the PSFCH sending location is dynamically indicated, the LTE terminal only avoids a part of the PSFCH sending location, and the LTE terminal has more optional resources.

The indicated content is a time domain offset value of the PSFCH sending/receiving location relative to the current time unit or the time unit in which the first information is located.

Optionally, the first time domain offset value is greater than or equal to the PSFCH sending and processing time and/or the PSFCH data processing time; or

the first time domain offset value is greater than or equal to M. M is a predefined, preconfigured, or configured value, and M meets at least one of the following: M is related to a sub-carrier space (sub-carrier space, SCS); or M is a physical time, or M is a logical time.

Optionally, when sending the PSFCH, the terminal sends a PSFCH feedback at a first PSFCH occasion after a minimum gap requirement between the PSSCH and the PSFCH is met.

In an embodiment, the method further includes:

> When performing revaluation or preemption check, the first terminal determines whether a PSFCH resource corresponding to a selected data sending resource is preempted or reserved by the second terminal; and
> if the PSFCH resource corresponding to the selected data sending resource is preempted or reserved by the second terminal, performing resource reselection for data transmission.

Specifically, when performing revaluation/preemption check, the first terminal needs to consider preemption of a reserved data sending resource and preemption of a PSFCH resource corresponding to the data sending resource by the LTE terminal. Therefore, when performing revaluation/preemption check, the first terminal needs to determine whether the reserved data sending resource is preempted and whether a resource on which a PSFCH feedback resource corresponding to the reserved data sending resource is located is preempted. When finding this case during revaluation/preemption check, the terminal also needs to reselect a reserved data sending resource, so that the PSFCH feedback resource corresponding to the selected data sending resource does not conflict with data sending of the LTE terminal.

In the foregoing embodiment, when the first terminal performs revaluation/preemption check, because preemption of the reserved data sending resource and preemption of the PSFCH resource corresponding to the data sending resource by the LTE terminal are considered, a resource conflict can be avoided.

In an embodiment, step 101 may be implemented in the following manner:

> If a PSFCH resource corresponding to a candidate resource in a first candidate resource set meets a target condition, the first terminal excludes the candidate resource from the first candidate resource set; and/or

if a candidate PSFCH resource in a second candidate resource set meets the target condition, the first terminal excludes a candidate resource corresponding to the candidate PSFCH resource from the first candidate resource set; and

the first terminal determines the first PSSCH resource based on a first candidate resource set obtained through resource exclusion.

Specifically, assuming that the first candidate resource set is $S_1$, the first candidate resource set $S_1$ may be obtained based on the resource selection window W1, and assuming that a PSFCH resource corresponding to a candidate resource P1 in $S_1$ meets the target condition, the first terminal excludes the candidate resource P1 from the first candidate resource set $S_1$; and/or assuming that the second candidate resource set is $S_2$, the second candidate resource set $S_2$ may be obtained based on the resource selection window W1, and assuming that a candidate PSFCH resource P2 in $S_2$ meets the target condition, the first terminal excludes a candidate resource P1 corresponding to the candidate PSFCH resource P2 from the first candidate resource set $S_1$.

Meeting the target condition indicates that the resource may be occupied or reserved by the second terminal; or the first PSSCH resource is determined based on the first candidate resource set obtained through exclusion, for example, a candidate resource in remaining resources in $S_1$ is selected and used as the first PSSCH resource.

In an embodiment, step 101 may be implemented in the following manner:

The first terminal determines the first PSSCH resource based on some candidate resources in a first candidate resource set and/or some candidate PSFCH resources in a second candidate resource set.

Specifically, the first terminal may select the first PSSCH resource from some candidate resources in the first candidate resource set, and/or may determine a first PSFCH transmission resource from some candidate PSFCH resources in the second candidate resource set, and select, as the first PSSCH resource, a candidate resource corresponding to the first PSFCH transmission resource from the first candidate resource set.

Some candidate resources or some candidate PSFCH resources may be resources not occupied or reserved by the second terminal in the first candidate resource set.

In the foregoing embodiment, if a PSFCH resource corresponding to a candidate resource in a first candidate resource set meets a target condition, the first terminal excludes the candidate resource from the first candidate resource set; and/or if a candidate PSFCH resource in a second candidate resource set meets the target condition, the first terminal excludes a candidate resource corresponding to the candidate PSFCH resource from the first candidate resource set, where excluding a resource meeting the target condition is excluding a resource on which a resource conflict may occur, and further, the first terminal determines the first PSSCH resource based on a first candidate resource set obtained through resource exclusion, to avoid a resource conflict; or the first terminal determines the first PSSCH resource based on a first candidate resource set and/or some resources in a second candidate resource set, where the resources may be resources on which a resource conflict does not occur, so that a resource conflict can be avoided.

In an embodiment, step 101 may be implemented as follows:

If a PSFCH resource corresponding to a candidate resource in a first candidate resource set meets a target condition, the first terminal excludes the candidate resource from the first candidate resource set; and

the first terminal determines the first PSFCH resource based on a first candidate resource set obtained through resource exclusion.

Specifically, assuming that the first candidate resource set is $S_1$, the first candidate resource set $S_1$ may be obtained based on the resource selection window W1, and assuming that a PSFCH resource corresponding to a candidate resource P1 in $S_1$ meets the target condition, the first terminal excludes the candidate resource P1 from the first candidate resource set $S_1$, and determines the first PSFCH resource based on the first candidate resource set obtained through exclusion, for example, a PSFCH resource corresponding to a candidate resource in remaining resources in $S_1$ is selected and used as the first PSFCH resource.

In an embodiment, step 101 may be implemented as follows:

The first terminal determines the first PSFCH resource based on some candidate resources in a first candidate resource set.

Specifically, the first terminal may select the first PSFCH resource or select a PSSCH transmission resource from some candidate resources in the first candidate resource set, and determine the first PSFCH resource based on the PSSCH transmission resource.

Some candidate resources may be resources occupied or reserved by the second terminal in the first candidate resource set.

Optionally, the candidate resource includes at least one of the following: a physical sidelink shared channel PSSCH resource and a physical sidelink control channel PSCCH resource.

Optionally, the first candidate resource set includes: a candidate resource, or a candidate resource and a PSFCH resource corresponding to the candidate resource.

Optionally, the target condition includes at least one of the following:

A first resource detected by the first terminal is an indication resource of the second terminal;

the first resource is a resource indicated by an SCI format 0 or 1;

a result obtained by the first terminal by measuring a reference signal carried in the first resource is larger than a first threshold, where the measurement result of the reference signal includes at least one of the following: a reference signal received power RSRP value, a signal energy value, and a channel quality value; or

the first resource and/or a reserved resource of the first resource conflict/conflicts with the PSFCH resource corresponding to the candidate resource.

The first threshold is an RSRP threshold for excluding a PSFCH resource based on a candidate resource conflict situation.

Specifically, that the PSFCH resource corresponding to the candidate resource meets the target condition includes at least one of the following:

As shown in FIG. 5, the first resource may be a resource in the resource detection window, and the first resource detected by the first terminal is the indication resource of the second terminal; or the first resource is the resource indicated by the SCI format 0 or 1, for example, a resource indicated in an SCI format sent by the LTE terminal; or the measurement result of the reference signal carried in the first resource is greater than the first threshold; or the candidate resource is a resource in the resource selection window, and the first resource and/or the reserved resource of the first resource conflict/conflicts with the PSFCH resource corresponding to the candidate resource.

For example, the first resource may be a PSCCH resource.

The indication resource of the second terminal is a resource for which control information is sent.

The reserved resource of the first resource is a reserved resource indicated by indication information sent on the first resource.

In the foregoing embodiment, excluding a resource meeting the target condition is excluding a resource on which a resource conflict may occur, and further, the first terminal determines the first PSSCH resource based on the first candidate resource set obtained through resource exclusion, to avoid a resource conflict; or the first terminal determines the first PSSCH resource based on some candidate resources in the first candidate resource set, and some candidate resources may be resources on which a resource conflict does not occur, so that a resource conflict can be avoided.

In an embodiment, that the first terminal determines the first PSFCH resource based on a first candidate resource set obtained through resource exclusion may be specifically implemented in the following manner:

The first terminal determines a first transmission resource based on the first candidate resource set obtained through resource exclusion; and

the first terminal determines the first PSFCH resource based on the first transmission resource.

Specifically, the first terminal determines the first transmission resource based on the first candidate resource set obtained through resource exclusion, and determines the corresponding first PSFCH resource based on the first transmission resource.

Optionally, the first terminal determines the first PSFCH resource based on the first transmission resource and a correspondence between a transmission resource and a PSFCH resource.

Specifically, the first terminal determines, based on the first transmission resource and the correspondence between the transmission resource and the PSFCH resource, the first PSFCH resource corresponding to the first transmission resource.

In the foregoing embodiment, the first terminal determines the first transmission resource based on the first candidate resource set obtained through resource exclusion; and the first terminal determines the first PSFCH resource corresponding to the first transmission resource based on the first transmission resource and the correspondence. In this way, implementation complexity is low.

In an embodiment, the correspondence may be preset or dynamically indicated.

A manner is: If the correspondence is preset, the correspondence includes:

If a transmission resource of the first terminal is located in a time unit t, a resource PSFCH sent by a corresponding receiving end is located in a time unit t+k, where t is an integer greater than or equal to 0, and k is a time offset value.

In this case, for the first terminal, because the PSFCH resource (PSFCH occasion) can be multiplexed by using a specific rule, the first terminal may not send data at a symbol location of the PSFCH when detecting data sending in the time unit t, or the first terminal may always send data in a frame structure having a PSFCH channel when considering that there may be a PSFCH channel in each time unit t, without considering an additional operation. For the second terminal, the first terminal can actively avoid resource reservation of the second terminal through resource selection, revaluation preemption detection, or the like, without any additional change.

The correspondence may be predefined in a protocol/preconfigured by the network side device/configured by the network side device.

Optionally, the time unit may be: a frame, a subframe, a symbol, a timeslot, or the like.

Another manner is: If the correspondence is dynamically indicated, the correspondence meets any one of the following conditions:

The first terminal sends data in a time unit t, and indicates a corresponding receiving end to send a PSFCH in a time unit t+k; or
the first terminal sends data in a time unit t, and indicates a time unit t+k.

Specifically, for example, when the time unit is a timeslot. The first terminal sends/receives data in a timeslot t, and indicates to send/receive a PSFCH feedback in a timeslot t+k, or indicates a timeslot t+k, that is, only location indication is performed.

Similarly, for the first terminal, because the PSFCH occasion can be multiplexed by using a specific rule, when another first terminal detects the indication of the timeslot t+k, the another first terminal does not consider that the indicated terminal performs resource reservation in the timeslot t+k, and may only consider that the indicated terminal may send a feedback in the timeslot t+k, to avoid only a symbol location at which the PSFCH is located, or may send a feedback at the same location by using a PSFCH multiplexing rule; When detecting the indication of the timeslot t+k, the second terminal may consider that the indicated terminal performs resource reservation in the timeslot t+k, to exclude a resource in the timeslot t+k.

Optionally, k is determined in at least one of the following manners:
predefining in the protocol, preconfiguring by the network side device, configuring by the network side device, preconfiguring by the first terminal, or configuring by the first terminal; or indicating by the radio resource control RRC, indicating by the media access layer control unit MAC CE, indicating by the downlink control information DCI, or indicating by the sidelink control information (Sidelink Control Information, SCI).

Specifically, a value of k is predefined in a protocol/preconfigured by a network/configured by a network/preconfigured by a terminal/configured by a terminal, or indicated by the RRC/MAC CE/DCI/SCI or the like; or
a value of k is determined by a rule predefined in a protocol/preconfigured by a network/configured by a network/preconfigured by a terminal/configured by a terminal, or determined by a rule indicated by the RRC/MAC CE/DCI/SCI or the like.

Further, in an embodiment, the method further includes:

if a quantity or a first ratio of candidate resources in the first candidate resource set obtained through resource exclusion is less than a third threshold, increasing a first threshold by a first offset value, and/or increasing a second threshold by a second offset value, where the second threshold is an RSRP threshold for excluding a candidate resource based on a candidate resource conflict situation, and the first ratio is a ratio of the quantity of candidate resources in the first candidate resource set obtained through resource exclusion to a quantity of candidate resources in the initial first candidate resource set; and
repeatedly performing a step of initializing the first candidate resource set and excluding the candidate resource from the first candidate resource set by the first terminal, until the quantity or the first ratio of the candidate resources in the first candidate resource set is greater than or equal to the third threshold.

Specifically, if the quantity or the first ratio of the remaining candidate resources in the first candidate resource set $S_1$ obtained through resource exclusion is less than the third threshold, at least one of the following operations may be performed:

increasing the first threshold by the first offset value, for example, an offset 1, performing resource exclusion again from an initialization step of the first candidate resource set, that is, initializing the first candidate resource set, and performing resource exclusion based on an initialized first candidate resource set; and
increasing the second threshold by the second offset value, for example, an offset 2, and performing resource exclusion again from an initialization step of the first candidate resource set.

The first threshold is an RSRP threshold for excluding a PSFCH resource based on a candidate resource conflict situation.

The second threshold is an RSRP threshold for excluding a candidate resource based on a candidate resource conflict situation.

Optionally, values of the first threshold, the second threshold, and the third threshold may be predefined in a protocol/preconfigured by a network side/configured by a network side/preconfigured by a terminal/configured by a terminal, or indicated by the RRC/MAC CE/DCI/SCI or the like.

The first threshold and the second threshold may be the same or different.

It should be noted that the third threshold corresponding to the quantity or the first ratio may be the same or different. This is not limited in embodiments of this application.

In an embodiment, the method further includes:

if a quantity or a first ratio of candidate resource pairs in the first candidate resource set obtained through resource exclusion is less than a third threshold, increasing a first threshold by a first offset value, and/or increasing a second threshold by a second offset value, where the second threshold is an RSRP threshold for excluding a candidate resource based on a candidate resource conflict situation, and the first ratio is a ratio of the quantity of candidate resource pairs in the first candidate resource set obtained through resource exclusion to a quantity of candidate resource pairs in the initial first candidate resource set; and

repeatedly performing a step of initializing the first candidate resource set and excluding the candidate resource from the first candidate resource set by the first terminal, until the quantity or the first ratio of the candidate resource pairs in the first candidate resource set is greater than or equal to the third threshold.

The candidate resource pair includes the candidate resource and the PSFCH resource corresponding to the candidate resource in the first candidate resource set.

Specifically, if the quantity or the first ratio of the remaining candidate resource pairs in the first candidate resource set obtained through resource exclusion is less than the third threshold, at least one of the following operations may be performed:

increasing the first threshold by the first offset value, for example, offset 1, performing resource exclusion again from an initialization step of the first candidate resource set, that is, initializing the first candidate resource set, and performing resource exclusion based on the initialized first candidate resource set; and

increasing the second threshold by the second offset value, for example, offset 2, performing resource exclusion again from an initialization step of the first candidate resource set.

The candidate resource pair includes the candidate resource and the PSFCH resource corresponding to the candidate resource in the first candidate resource set.

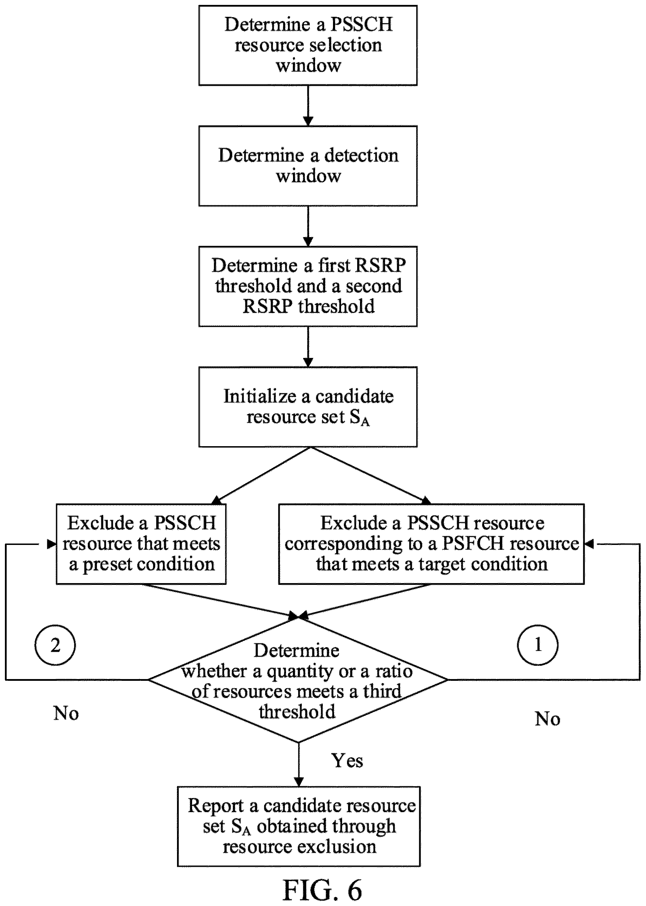

In an embodiment, as shown in FIG. 6, after initializing a candidate resource set $S_A$, when performing resource exclusion, the terminal not only needs to exclude a PSSCH resource meeting a preset condition, but also needs to exclude a PSSCH resource corresponding to a PSFCH resource meeting the target condition, so that a conflict between a PSFCH resource that is in a resource set reported by the terminal to a high layer and that corresponds to a resource for sending the PSSCH/PSCCH and the data sent by the LTE terminal can be avoided.

If a quantity of resources in the candidate resource set $S_A$ cannot meet the third threshold requirement, the RSRP threshold needs to be increased, and a resource exclusion process needs to be repeated again. Because there are two exclusion conditions (the preset condition and the target condition), and the corresponding RSRP thresholds may be different, any one of the following methods may be used:

1. adjusting both the first threshold and the second threshold, as ① and ② shown in FIG. 6, and then performing resource exclusion again based on a new RSRP threshold, until the quantity of resources in the candidate resource set $S_A$ meets the third threshold;

2. adjusting only the first threshold, as ① shown in the figure, and then performing resource exclusion again based on a new RSRP threshold, until the quantity of resources in the candidate resource set $S_A$ meets the third threshold; or

3. adjusting only the second threshold, as ② shown in the figure, and then performing resource exclusion again based on a new RSRP threshold, until the quantity of resources in the candidate resource set $S_A$ meets the third threshold.

The preset condition may be a condition defined in the protocol to exclude the PSSCH resource.

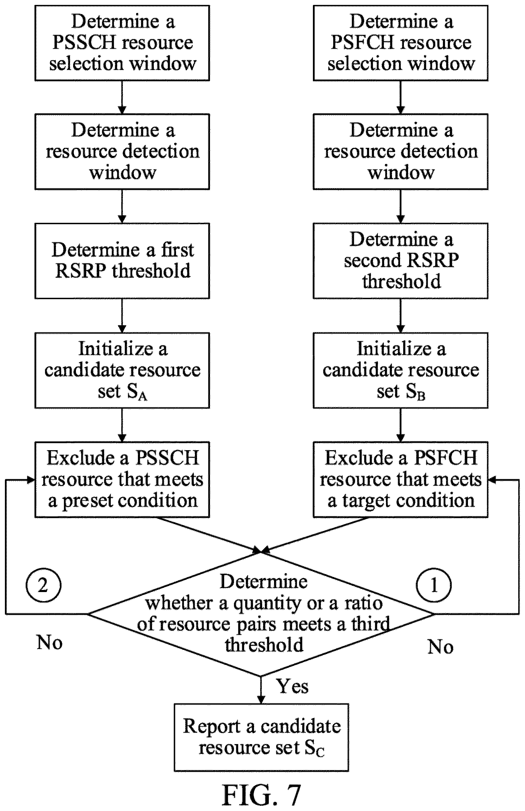

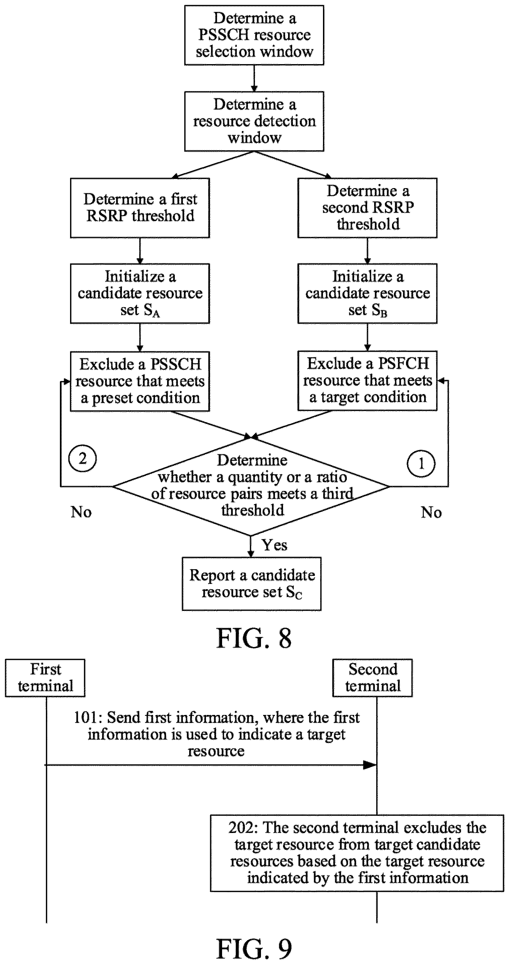

In another embodiment, as shown in FIG. 7 and FIG. 8, for example, the candidate resource is a PSSCH resource. On the premise that there is a correspondence between a PSSCH and a PSFCH resource, by using a method of selecting a resource pair from a candidate resource pair set, the PSFCH resource can be determined by selecting the PSSCH resource by excluding the PSSCH resource meeting the preset condition and excluding the PSFCH resource meeting the target condition. In this case, because the resource reserved by the LTE terminal is excluded during resource exclusion, a problem that the NR terminal collides with the data sent by the LTE when sending the PSFCH can be avoided.

As shown in FIG. 7, the terminal enables resource selection of the PSSCH resource and the PSFCH resource in a resource selection process. First, through a resource selection window $[n+T_1, n+T_2]$ of the PSSCH, it is determined, based on the correspondence between PSSCH and PSFCH, that a resource selection window of the PSFCH is $[n+T_1+k, n+T_2+k]$, and the resource detection window and the candidate resource set is further determined. In addition, because PSFCH resource exclusion needs to consider only a resource reservation condition of the LTE terminal, when the RSRP threshold is set, an RSRP threshold different from that of PSSCH resource selection can be used, or the RSRP threshold is not set. When the resource reservation condition of LTE terminals is detected, the corresponding resource is directly excluded. After resource exclusion is performed on the PSSCH resource based on the preset condition and on the PSFCH resource based on the target condition, the PSSCH candidate resource set $S_A$ and a PSFCH candidate resource set $S_B$ are obtained. Alternatively, as shown in FIG. 8, resource selection of the terminal is still a process, but the PSSCH candidate resource set $S_A$, the PSFCH candidate resource set $S_B$, and the corresponding RSRP threshold of resource exclusion are initialized, and then, resource exclusion is performed on the PSSCH resource and the PSFCH resource based on the preset condition and the target condition respectively.

After this, whether a quantity or a ratio of resource pairs that are in $S_A$ and $S_B$ and that can form the correspondence between the PSSCH and the PSFCH meets the third threshold is determined, if the quantity or the ratio of resource pairs does not meet the third threshold, any one of the following three methods can be used:

1. adjusting both the first threshold and the second threshold, as ① and ② shown in FIG. 7 and FIG. 8, and then performing resource exclusion again based on a new RSRP threshold, until the quantity or the ratio of resource pairs meets the third threshold;
2. adjusting only the first threshold, as ① shown in FIG. 7 and FIG. 8, and then performing PSSCH resource exclusion again based on a new RSRP threshold, until the quantity or the ratio of resource pairs meets the third threshold; and
3. adjusting only the second threshold, as ② shown in FIG. 7 and FIG. 8, and then performing PSFCH resource exclusion again based on a new RSRP threshold, until the quantity or the ratio of resource pairs meets the third threshold.

When the quantity or the ratio of resource pairs that are in $S_A$ and $S_B$ and that can form the correspondence between the PSSCH and the PSFCH meets the third threshold, a candidate resource set $S_C$ is reported to the high layer, and the high layer performs selection. In this case, the candidate resource set $S_C$ may include a resource pairs meeting the correspondence, or may include only a PSSCH candidate resource that is in $S_A$ and that meets the correspondence.

In another embodiment, step 101 may be implemented in the following manner:

If a candidate PSFCH resource in a second candidate resource set meets a target condition, the first terminal excludes the candidate PSFCH resource from the second candidate resource set, and/or the first terminal excludes a candidate resource corresponding to the candidate PSFCH resource from a first candidate resource set; and the first terminal determines the first PSFCH resource based on the second candidate resource set and/or the first candidate resource set.

Specifically, it is assumed that there are the first candidate resource set $S_1$ and the second candidate resource set $S_2$, $S_1$ includes at least the candidate resource, and $S_2$ includes the candidate PSFCH resource. If there is a candidate PSFCH resource P2 in $S_2$ meets the target condition, the candidate PSFCH resource P2 is excluded from the second candidate resource set $S_2$, and/or a candidate resource P1 is excluded from the first candidate set, where P1 corresponds to P2.

The first terminal determines the first PSFCH resource based on a second candidate resource set and/or a first candidate resource set obtained through resource exclusion.

For example, a PSFCH resource is randomly selected from the second candidate resource set as the first PSFCH resource, or a first transmission resource is randomly selected from the first candidate resource set, and then a PSFCH resource corresponding to the first transmission resource is selected from the second candidate resource set as the first PSFCH resource.

In another embodiment, step 101 may be implemented in the following manner:
The first terminal determines the first PSFCH resource based on a candidate PSFCH resource in a second candidate resource set and/or a candidate resource in a first candidate resource set.

Specifically, the first terminal may select the first PSFCH resource from candidate resources in the first candidate resource set, or select a PSSCH transmission resource and determine the first PSFCH resource based on the PSSCH transmission resource, or directly determine the first PSFCH resource based on the candidate PSFCH resource in the second candidate resource set.

The candidate resource may be a resource not occupied or reserved by the second terminal in the first candidate resource set, and the candidate PSFCH resource may be a resource not occupied or reserved by the second terminal in the second candidate resource set.

A range of a selection window corresponding to the first PSFCH resource is $[n+T_1+k, n+T_2+k]$, where n indicates a packet arrival time, $T_1$ indicates a start location, $T_2$ indicates an end location, and k indicates a time offset value.

Alternatively, a range of a selection window corresponding to the candidate resource may be $[n+T_1, n+T_2]$.

In the foregoing embodiment, excluding a resource meeting the target condition is excluding a resource on which a resource conflict may occur, and further, the first terminal determines the first PSSCH resource based on the second candidate resource set and/or the first candidate resource set obtained through resource exclusion, to avoid a resource conflict; or the first terminal determines the first PSSCH resource based on some candidate PSFCH resource in the second candidate resource set and/or some candidate resources in the first candidate resource set, and some resources may be resources on which a resource conflict does not occur, so that a resource conflict can be avoided.

In an embodiment, the method further includes:

The first terminal takes, as a candidate resource pair in a third candidate resource set, a candidate resource in the first candidate resource set obtained through resource exclusion and a candidate PSFCH resource that is in the second candidate resource set obtained through resource exclusion and that meets a correspondence; or

the first terminal takes, as a candidate resource in a third candidate resource set, a second candidate resource in the first candidate resource set obtained through resource exclusion, where the second candidate resource is a candidate resource that meets a correspondence with a candidate PSFCH resource in a second candidate resource set obtained through resource exclusion; or

the first terminal excludes a third candidate resource in a first candidate resource set obtained through resource exclusion, to obtain a third candidate resource set, where the third candidate resource is a candidate resource that does not meet a correspondence with any candidate PSFCH resource in a second candidate resource set obtained through resource exclusion.

That the first terminal determines the first PSFCH resource based on the second candidate resource set and/or the first candidate resource set includes:

The first terminal determines the first PSFCH resource based on the third candidate resource set.

Optionally, the first terminal determines the first PSSCH resource based on the third candidate resource set.

Specifically, a resource pair that is in the first candidate resource set $S_1$ and the second candidate resource set $S_2$ and that meets a time domain correspondence between the candidate resource and the PSFCH resource is put into the third candidate resource set $S_3$ (a form of reporting to the higher layer is a form of a resource pair), or a candidate resource that is in the first candidate resource set $S_1$ and that has a time domain correspondence in $S_2$ is put into the third candidate resource set $S_3$ (a resource reported to the higher layer is still in a form of a candidate resource for data sending), or a candidate resource that is in the first candidate resource set $S_1$ and that has no time domain correspondence in $S_2$ is excluded, to obtain a third candidate resource set $S_3$ (a resource set reported to the high layer is the third candidate resource set $S_3$, namely, the first candidate resource set $S_1$ obtained through resource exclusion1).

For a manner of determining the first PSFCH resource by the first terminal based on the third candidate resource set $S_3$, refer to the manner of determining the first PSFCH in the foregoing embodiments. Details are not described herein again.

For a manner of determining the first PSSCH resource by the first terminal based on the third candidate resource set $S_3$, refer to the manner of determining the first PSFCH in the foregoing embodiments. Details are not described herein again.

In an embodiment, the method further includes:

if a quantity of candidate resources or candidate resource pairs in the third candidate resource set is less than a third threshold, increasing a first threshold by a first offset value, and repeatedly performing a step of initializing the second candidate resource set and excluding the candidate PSFCH resource from the second candidate resource set by the first terminal, until the quantity of candidate resources or candidate resource pairs in the third candidate resource set is greater than or equal to the third threshold; and/or

if a quantity of candidate resources or candidate resource pairs in the third candidate resource set is less than a third threshold, increasing a second threshold by a second offset value, and repeatedly performing a step of initializing the first candidate resource set and excluding the candidate PSFCH resource from the second candidate resource set by the first terminal, until the quantity of candidate resources or candidate resource pairs in the third candidate resource set is greater than or equal to the third threshold; and/or

Specifically, if the quantity of candidate resources or candidate resource pairs in the third candidate resource set is less than the third threshold, at least one of the following operations may be performed:

increasing the first threshold by the first offset value, for example, an offset 1, performing resource exclusion again from an initialization step of the second candidate resource set, that is, initializing the second candidate resource set, and performing resource exclusion based on an initialized second candidate resource set; and
increasing the second threshold by the second offset value, for example, an offset 2, and performing resource exclusion again from an initialization step of the first candidate resource set.

The first threshold is an RSRP threshold for excluding a PSFCH resource based on a candidate resource conflict situation.
The second threshold is an RSRP threshold for excluding a candidate resource based on a candidate resource conflict situation.
Optionally, values of the first threshold, the second threshold, and the third threshold may be predefined in a protocol/preconfigured by a network side/configured by a network side/preconfigured by a terminal/configured by a terminal, or indicated by the RRC/MAC CE/DCI/SCI or the like.
The first threshold and the second threshold may be the same or different. This is not limited in embodiments of this application.
Optionally, the method further includes:

if a quantity of candidate resources or candidate resource pairs in the third candidate resource set is less than a third threshold, increasing a second threshold by a second offset value, and repeatedly performing a step of initializing the first candidate resource set and excluding the PSFCH resource from the second candidate resource set by the first terminal, until the quantity of candidate resources or candidate resource pairs in the third candidate resource set is greater than or equal to the third threshold, where the second ratio is a ratio of a quantity of candidate resources in the third candidate resource set to a quantity of candidate resources in the first candidate resource set; and/or
if a second ratio of candidate resources in the third candidate resource set is less than a third threshold, increasing a second threshold by a first offset value, and repeatedly performing a step of initializing the first candidate resource set and excluding the candidate PSFCH resource from the second candidate resource set by the first terminal, until the second ratio of candidate resources in the third candidate resource set is greater than or equal to the third threshold.

Specifically, the foregoing method is similar to the processing procedure in a case in which the quantity of candidate resources is less than the third threshold. Details are not described herein again.
Optionally, the method further includes:

if a third ratio of candidate resource pairs in the third candidate resource set is less than a third threshold, increasing a first threshold by a first offset value, and repeatedly performing a step of initializing the second candidate resource set and excluding the candidate PSFCH resource from the second candidate resource set by the first terminal, until the third ratio of candidate resource pairs in the third candidate resource set is greater than or equal to the third threshold, where the third ratio is a ratio of a quantity of candidate resource pairs in the third candidate resource set to a quantity of candidate PSFCH resources in the second candidate resource set; and/or
if a third ratio of candidate resource pairs in the third candidate resource set is less than a third threshold, increasing a second threshold by a second offset value, and repeatedly performing a step of initializing the first candidate resource set and excluding the candidate resource from the first candidate resource set by the first terminal, until the third ratio of candidate resource pairs in the third candidate resource set is less than is greater than or equal to the third threshold.

Specifically, the foregoing method is similar to the processing procedure in a case in which the quantity of candidate resource pairs is less than the third threshold. Details are not described herein again.
It should be noted that the third threshold corresponding to the quantity or the ratio may be the same or different. This is not limited in embodiments of this application.
In an embodiment, the method further includes:

if a quantity or a first ratio of candidate resources in the first candidate resource set obtained through resource exclusion is less than a third threshold, increasing a first threshold by a first offset value, and/or increasing a second threshold by a second offset value, where the first ratio is a ratio of the quantity of candidate resources in the first candidate resource set obtained through resource exclusion to a quantity of candidate resources in the initial first candidate resource set; and

repeatedly performing a step of initializing the first candidate resource set and/or the second candidate resource set and excluding the candidate resource from the first candidate resource set and/or the second candidate resource set by the first terminal, until a quantity of candidate resources in the first candidate resource set is greater than or equal to the third threshold.

Specifically, if the quantity or the first ratio of the remaining candidate resources in the first candidate resource set obtained through resource exclusion is less than the third threshold, at least one of the following operations may be performed:

increasing the first threshold by the first offset value, for example, an offset 1, performing resource exclusion again from an initialization step of the first candidate resource set, that is, initializing the first candidate resource set, and performing resource exclusion based on an initialized first candidate resource set; and
increasing the second threshold by the second offset value, for example, an offset 2, and performing resource exclusion again from an initialization step of the second candidate resource set.

The first threshold is an RSRP threshold for excluding a PSFCH resource based on a candidate resource conflict situation.
The second threshold is an RSRP threshold for excluding a candidate resource based on a candidate resource conflict situation.

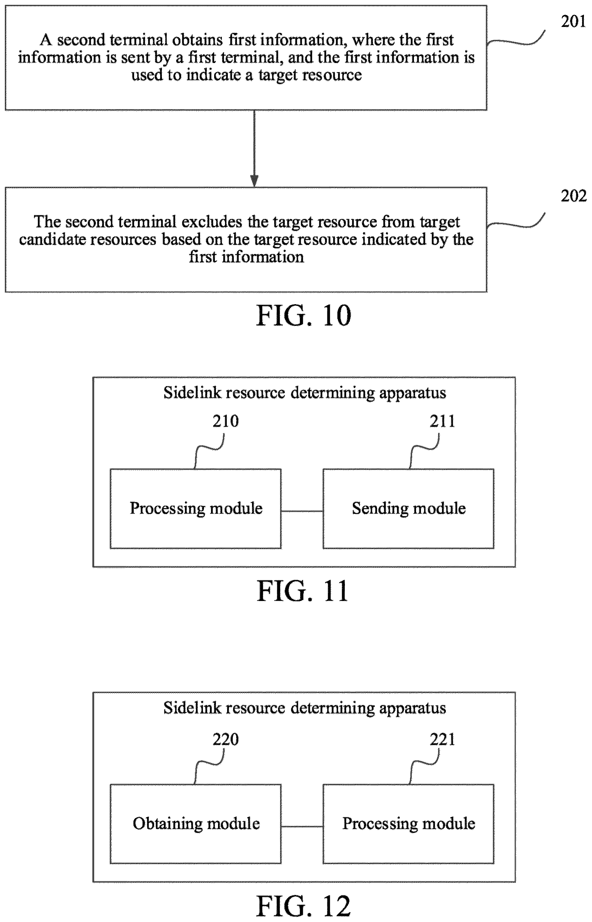

FIG. 10 is a schematic flowchart 2 of a sidelink resource determining method according to an embodiment of this application. As shown in FIG. 9 and FIG. 10, an embodiment of this application provides a sidelink resource determining method.
Step 201: A second terminal obtained first information. The first information is sent by a first terminal, and the first information is used to indicate a target resource.
Step 202: The second terminal excludes the target resource from target candidate resources based on the target resource indicated by the first information.
Optionally, the method further includes:
The second terminal adjusts a priority and/or an RSRP threshold corresponding to the target resource. The RSRP threshold is an RSRP threshold of the target resource that is excluded based on a resource conflict situation.
A specific implementation process and technical effect of the method in this embodiment are similar to those in a method embodiment of the first terminal side. For details, refer to the method embodiment of the first terminal side. Details are not described herein again.
In the sidelink resource determining method provided in embodiments of this application, an executive body may be a sidelink resource determining apparatus. In embodiments of the application, the sidelink resource determining apparatus provided in embodiments of this application is described by using an example in which the sidelink resource determining apparatus performs the sidelink resource determining method.
FIG. 11 is a schematic diagram 1 of a structure of a sidelink resource determining apparatus according to this application. As shown in FIG. 11, the sidelink resource determining apparatus according to an embodiment of this application includes:

a processing module 210, configured to determine a first physical sidelink feedback channel PSFCH resource and/or a first physical sidelink shared channel PSSCH resource; and/or
a transmitting module 211, configured to send first information, where the first information is used to indicate the first PSFCH resource.

In the apparatus according to this embodiment, the processing module determines the first physical sidelink feedback channel PSFCH resource, to avoid a resource occupied or reserved by another terminal; and/or the transmitting module sends the first information, and the first information is used to indicate the first PSFCH resource, so that when receiving the first information, the second terminal may perform resource selection based on the resource indicated by the first information, to avoid a conflict with the resource indicated by the first information.
Optionally, the processing module 210 is specifically configured to:

if a PSFCH resource corresponding to a candidate resource in a first candidate resource set meets a target condition, exclude the candidate resource from the first candidate resource set; and/or
if a candidate PSFCH resource in a second candidate resource set meets the target condition, exclude a candidate resource corresponding to the candidate PSFCH resource from the first candidate resource set; and
determine the first PSSCH resource based on a first candidate resource set obtained through resource exclusion.

Optionally, the first PSSCH resource is determined based on some candidate resources in a first candidate resource set and/or some candidate PSFCH resources in a second candidate resource set.

Optionally, the processing module 210 is specifically configured to:

if a PSFCH resource corresponding to a candidate resource in a first candidate resource set meets a target condition, exclude the candidate resource from the first candidate resource set; and
determine the first PSFCH resource based on a first candidate resource set obtained through resource exclusion.

Optionally, the processing module 210 is specifically configured to:
determine the first PSFCH resource based on some candidate resources in a first candidate resource set.

Optionally, the processing module 210 is specifically configured to:

a first terminal determines a first transmission resource based on the first candidate resource set obtained through resource exclusion; and
the first terminal determines the first PSFCH resource based on the first transmission resource.

Optionally, the processing module 210 is specifically configured to:
the first terminal determines the first PSFCH resource based on the first transmission resource and a correspondence between a transmission resource and a PSFCH resource.

Optionally, the target condition includes at least one of the following:

A first resource detected by the first terminal is an indication resource of the second terminal;
the first resource is a resource indicated by an SCI format 0 or 1;
a result obtained by the first terminal by measuring a reference signal carried in the first resource is larger than a first threshold, where the measurement result of the reference signal includes at least one of the following: a reference signal received power RSRP value, an energy value, and a channel quality value; and
the first resource and/or a reserved resource of the first resource conflict/conflicts with the PSFCH resource corresponding to the candidate resource.

Optionally, the correspondence includes:
If a transmission resource of the first terminal is located in a time unit t, a resource PSFCH sent by a corresponding receiving end is located in a time unit t+k, where t is an integer greater than or equal to 0, and k is a time offset value.

Optionally, the correspondence meets any one of the following conditions:

The first terminal sends data in a time unit t, and indicates a corresponding receiving end to send a PSFCH in a time unit t+k; or
the first terminal sends data in a time unit t, and indicates a time unit t+k.

Optionally, k is determined in at least one of the following manners:
predefining in the protocol, preconfiguring by the network side device, configuring by the network side device, preconfiguring by the first terminal, or configuring by the first terminal; or indicating by the radio resource control RRC, indicating by the media access layer control unit MAC CE, indicating by the downlink control information DCI, or indicating by the sidelink control information SCI.

Optionally, the processing module 210 is further configured to:

if a quantity or a first ratio of candidate resources in the first candidate resource set obtained through resource exclusion is less than a third threshold, increase a first threshold by a first offset value, and/or increase a second threshold by a second offset value, where the second threshold is an RSRP threshold for excluding a candidate resource based on a candidate resource conflict situation, and the first ratio is a ratio of the quantity of candidate resources in the first candidate resource set obtained through resource exclusion to a quantity of candidate resources in the initial first candidate resource set; and
repeatedly perform a step of initializing the first candidate resource set and excluding the candidate resource from the first candidate resource set by the first terminal, until the quantity or the first ratio of the candidate resources in the first candidate resource set is greater than or equal to the third threshold.

Optionally, the processing module 210 is further configured to:

if a quantity or a first ratio of candidate resource pairs in the first candidate resource set obtained through resource exclusion is less than a third threshold, increase a first threshold by a first offset value, and/or increase a second threshold by a second offset value, where the second threshold is an RSRP threshold for excluding a candidate resource based on a candidate resource conflict situation, and the first ratio is a ratio of the quantity of candidate resource pairs in the first candidate resource set obtained through resource exclusion to a quantity of candidate resource pairs in the initial first candidate resource set; and

repeatedly perform a step of initializing the first candidate resource set and excluding the candidate resource from the first candidate resource set by the first terminal, until the quantity or the first ratio of the candidate resource pairs in the first candidate resource set is greater than or equal to the third threshold, where the candidate resource pair includes the candidate resource and the PSFCH resource corresponding to the candidate resource in the first candidate resource set.

Optionally, the candidate resource includes at least one of the following: a physical sidelink shared channel PSSCH resource and a physical sidelink control channel PSCCH resource. The first candidate resource set includes: a candidate resource, or a candidate resource and a PSFCH resource corresponding to the candidate resource.

Optionally, the processing module 210 is specifically configured to:

if a candidate PSFCH resource in a second candidate resource set meets a target condition, the first terminal excludes the candidate PSFCH resource from the second candidate resource set, and/or the first terminal excludes a candidate resource corresponding to the candidate PSFCH resource from a first candidate resource set; and the first terminal determines the first PSFCH resource based on the second candidate resource set and/or the first candidate resource set.

Optionally, the processing module 210 is further configured to:

the first terminal takes, as a candidate resource pair in a third candidate resource set, a candidate resource in a first candidate resource set obtained through resource exclusion and a candidate PSFCH resource that is in the second candidate resource set obtained through resource exclusion and that meets a correspondence; or the first terminal takes, as a candidate resource in a third candidate resource set, a second candidate resource in the first candidate resource set obtained through resource exclusion, where the second candidate resource is a candidate resource that meets a correspondence with a candidate PSFCH resource in a second candidate resource set obtained through resource exclusion; or the first terminal excludes a third candidate resource in a first candidate resource set obtained through resource exclusion, to obtain a third candidate resource set, where the third candidate resource is a candidate resource that does not meet a correspondence with any candidate PSFCH resource in a second candidate resource set obtained through resource exclusion.

Optionally, the processing module 210 is specifically configured to:
the first terminal determines the first PSFCH resource based on the third candidate resource set.
Optionally, the processing module 210 is specifically configured to:
the first terminal determines the first PSSCH resource based on the third candidate resource set.
Optionally, the processing module 210 is further configured to:

if a quantity of candidate resources or candidate resource pairs in the third candidate resource set is less than a third threshold, increase a first threshold by a first offset value, and repeatedly perform a step of initializing the second candidate resource set and excluding the candidate PSFCH resource from the second candidate resource set by the first terminal, until the quantity of candidate resources or candidate resource pairs in the third candidate resource set is greater than or equal to the third threshold; and/or if a quantity of candidate resources or candidate resource pairs in the third candidate resource set is less than a third threshold, increase a second threshold by a second offset value, and repeatedly perform a step of initializing the first candidate resource set and excluding the candidate resource from the second candidate resource set by the first terminal, until the quantity of candidate resources or candidate resource pairs in the third candidate resource set is greater than or equal to the third threshold.

Optionally, the processing module 210 is further configured to:

if a quantity or a first ratio of candidate resources in the first candidate resource set obtained through resource exclusion is less than a third threshold, increase a first threshold by a first offset value, and/or increase a second threshold by a second offset value, where the first ratio is a ratio of the quantity of candidate resources in the first candidate resource set obtained through resource exclusion to a quantity of candidate resources in the initial first candidate resource set; and

repeatedly perform a step of initializing the first candidate resource set and excluding the candidate PSFCH resource from the first candidate resource set by the first terminal, until a quantity of candidate PSSCH resources in the first candidate resource set is greater than or equal to the third threshold.

Optionally, the processing module 210 is further configured to:

if a second ratio of candidate resources in the third candidate resource set is less than a third threshold, increase a first threshold by a first offset value, and repeatedly perform a step of initializing the second candidate resource set and excluding the candidate PSFCH resource from the second candidate resource set by the first terminal, until the second ratio of candidate resources in the third candidate resource set is greater than or equal to the third threshold, where the second ratio is a ratio of a quantity of candidate PSSCH resources in the third candidate resource set to a quantity of candidate PSSCH resources in the first candidate resource set; and/or
if a second ratio of candidate resources in the third candidate resource set is less than a third threshold, increase a second threshold by a first offset value, and repeatedly perform a step of initializing the first candidate resource set and excluding the candidate PSSCH resource from the first candidate resource set by the first terminal, until the second ratio of candidate PSSCH resources in the third candidate resource set is greater than or equal to the third threshold.

Optionally, the processing module 210 is further configured to:

if a third ratio of candidate resource pairs in the third candidate resource set is less than a third threshold, increase a first threshold by a first offset value, and repeatedly perform a step of initializing the second candidate resource set and excluding the candidate PSFCH resource from the second candidate resource set by the first terminal, until the third ratio of candidate resource pairs in the third candidate resource set is greater than or equal to the third threshold, where the third ratio is a ratio of a quantity of candidate resource pairs in the third candidate resource set to a quantity of candidate PSFCH resources in the second candidate resource set; and/or
if a third ratio of candidate resource pairs in the third candidate resource set is less than a third threshold, increase a second threshold by a second offset value, and repeatedly perform a step of initializing the first candidate resource set and excluding the candidate resource from the first candidate resource set by the first terminal, until the third ratio of candidate resource pairs in the third candidate resource set is less than is greater than or equal to the third threshold.

Optionally, a range of a selection window corresponding to the first PSFCH resource is $[n+T_1+k, n+T_2+k]$, where n indicates a packet arrival time, $T_1$ indicates a start location, $T_2$ indicates an end location, and k indicates a time offset value.
Optionally, the first information is indicated by a time gap between initial transmission and retransmission indicator field.
Optionally, the first information is used to indicate at least one of the following:

a PSFCH period;
a time-frequency domain location of a PSFCH resource; and
a time-frequency domain size of the PSFCH resource.

Optionally, a PSFCH sending or receiving location indicated by the first information meets at least one of the following:

The PSFCH sending location is a PSFCH sending location of a period closest to a current transmission time;
the PSFCH receiving location is a PSFCH receiving location of a period closest to a current transmission time;
the PSFCH sending location is a PSFCH sending location of a closest period with a gap greater than a duration threshold from the current transmission time;
the PSFCH receiving location is a PSFCH receiving location of a closest period with a gap greater than a duration threshold from the current transmission time;
the PSFCH sending location is a PSFCH sending location of a random period in a range indicated by the first information; and
the PSFCH receiving location is a PSFCH receiving location of a random period in a range indicated by the first information.

Optionally, the PSFCH sending location or receiving location is determined by a PSFCH period or the start location.

Optionally, the PSFCH period or the start location is indicated by at least one of the following:
predefining in the protocol, preconfiguring by the network side device, configuring by the network side device, preconfiguring by the first terminal, or configuring by the first terminal; or indicating by the radio resource control RRC, indicating by the media access layer control unit MAC CE, indicating by the downlink control information DCI, or indicating by the sidelink control information SCI.

Optionally, in a case that a current transmission time domain location is located at a periodically configured PSFCH sending or receiving location, the processing module 210 is further configured to perform configuration according to at least one of the following:

configuring a retransmission index indicator field as a first preset value;
configuring a time gap between initial transmission and retransmission indicator field as a first preset value; and
configuring a time gap between initial transmission and retransmission indicator field as a PSFCH period.

Optionally, a PSFCH sending location and/or a PSFCH receiving location are dynamically indicated by the first terminal, and at least one of the following is met:

The PSFCH sending location is indicated by a time gap between initial transmission and retransmission indicator field; and
content of the dynamic indication is a first time domain offset value of the PSFCH sending location or the PSFCH receiving location relative to a target time unit. The target time unit includes at least one of the following: a current time unit or a time unit in which the first information is located.

Optionally, the first time domain offset value is greater than or equal to the PSFCH sending and processing time and/or the PSFCH data processing time; or
the first time domain offset value is greater than or equal to M, where M is a predefined, preconfigured, or configured value, and M meets at least one of the following: M is related to an SCS, M is a physical time, or M is a logical time.

Optionally, the processing module 210 is further configured to:

when performing revaluation or preemption check, the first terminal determines whether a PSFCH resource corresponding to a selected data sending resource is preempted or reserved by the second terminal; and
if the PSFCH resource corresponding to the selected data sending resource is preempted or reserved by the second terminal, perform resource reselection for data transmission.

The apparatus of embodiments can be used for performing the method of any one of the foregoing method embodiments of the first terminal side, and a specific implementation process and technical effect are similar to those of the method embodiment of the first terminal side. For details, refer to the method embodiment of the first terminal side. Details are not described herein again.

FIG. 12 is a schematic diagram 2 of a structure of a sidelink resource determining apparatus according to this application. As shown in FIG. 12, the sidelink resource determining apparatus according to an embodiment of this application includes:

an obtaining module 220, configured to obtain first information, where the first information is sent by a first terminal, and the first information is used to indicate a target resource; and
a processing module 221, configured to exclude the target resource from target candidate resources based on the target resource indicated by the first information.

Optionally, the processing module 221 is specifically configured to:
adjust a priority and/or an RSRP threshold corresponding to the target resource. The RSRP threshold is an RSRP threshold of the target resource that is excluded based on a resource conflict situation.

The apparatus of embodiments can be used for performing the method of any one of the foregoing method embodiments of the second terminal side, and a specific implementation process and technical effect are similar to those of the method embodiment of the second terminal side. For details, refer to the method embodiment of the second terminal side. Details are not described herein again.

The sidelink resource determining apparatus in embodiments of this application may be an electronic device, for example, an electronic device having an operating system, or may be a component in an electronic device, for example, an integrated circuit or a chip. The electronic device may be a terminal or a device other than the terminal. For example, the terminal may include, but is not limited to, a type of the terminal 11 listed above, and the another device may be a server or a network attached storage (Network Attached Storage, NAS). This is not limited in embodiments of this application.

The sidelink resource determining apparatus according to embodiments of this application can implement all processes implemented in the method embodiments shown in FIG. 3 to FIG. 10, and the same technical effect can be achieved. To avoid repetition, details are not described herein again.

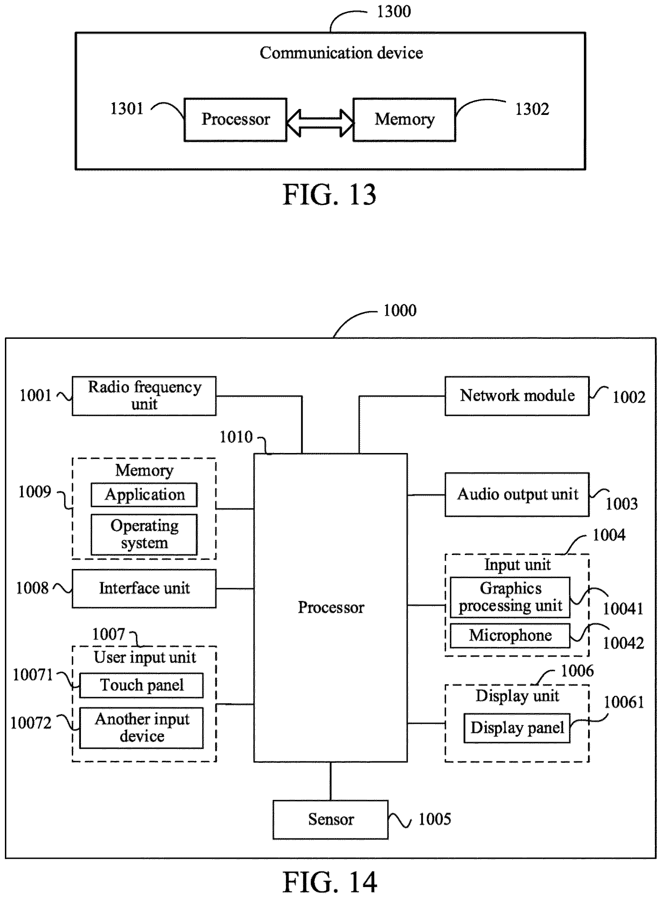

Optionally, as shown in FIG. 13, an embodiment of this application further provide a communication device 1300, including a processor 1301 and a memory 1302. The memory 1302 stores programs or instructions that can be run on the processor 1301. For example, when the communication device 1300 is the first terminal, the programs or instructions are executed by the processor 1301 to implement the steps of the embodiments of the sidelink resource determining method, and the same technical effect can be achieved. When the communication device 1300 is the second terminal, the programs or instructions are executed by the processor 1301 to implement the steps of the embodiments of the sidelink resource determining method, and the same technical effect can be achieved. To avoid repetition, details are not described herein again.

An embodiment of this application further provide a first terminal, including a processor and a communication interface. The processor is configured to determine a first physical sidelink feedback channel PSFCH resource, and/or the communication interface is configured to send first information. The first information is used to indicate the first PSFCH resource. The embodiment of the first terminal corresponds to the method embodiment of the first terminal side, and implementation processes and implementations of the method embodiment can be applied to the embodiment of the first terminal, and the same technical effect can be achieved. Specifically, FIG. 14 is a schematic diagram of a hardware structure of a terminal according to an embodiment of this application.

A terminal 1000 includes, but is not limited to: at least some components of a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

A person skilled in the art can understand that the terminal 1000 may further include a power supply (for example, a battery) for supplying power to each component. The power supply may be logically connected to the processor 1010 by using a power management system, thereby implementing functions such as charging, discharging, and power consumption management by using the power management system. The structure of the terminal shown in FIG. 14 does not constitute a limitation on the terminal, and the terminal may include more or fewer components than those shown in the figure, or combine some components, or have different component arrangements. Details are not described herein again.

It should be understood that in embodiments of this application, the input unit 1004 may include a graphics processing unit (Graphics Processing Unit, GPU) 10041 and a microphone 10042. The graphics processing unit 10041 performs processing on image data of a static picture or a video that is obtained by an image capture device (for example, a camera) in a video capture mode or an image capture mode. The display unit 1006 may include a display panel 10061. The display panel 10061 may be configured in a form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. Specifically, the another input device 10072 may include, but not limited to, a physical keyboard, a functional button (for example, a volume control button or a switch button), a track ball, a mouse, and a joystick. Details are not described herein.

In embodiments of this application, the radio frequency unit 1001 receives downlink data from a network side device, and then transmits the downlink data to the processor 1010 for processing. In addition, the radio frequency unit 1001 may send uplink data to the network side device. Generally, the radio frequency unit 1001 includes, but is not limited to, an antenna, at least one amplifier, a transceiver, a coupler, a low noise amplifier, a duplexer, and the like.

The memory 1009 is configured to store a software program and various data. The memory 1009 may mainly include a first storage area for storing programs and instructions and a second storage area for storing data. The first program and instruction storage area may store an operating system, an application required by at least one function (for example, a sound playing function and an image display function), and the like. In addition, the memory 1009 may include a volatile memory or a non-volatile memory, or the memory 1009 may include both a volatile memory and a non-volatile memory. The memory 1009 may include a high-speed random access memory, or may include a non-volatile memory. The non-volatile memory may be a read-only memory (Read-Only Memory, ROM), a programmable ROM (Programmable ROM, PROM), an erasable programmable read-only memory (Erasable PROM, EPROM), an electrically erasable programmable read-only memory (Electrically EPROM, EEPROM), or a flash memory. The non-volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DR RAM). The memory 109 in embodiments of this application includes, but is not limited to these and any other suitable types of memories, such as at least one magnetic disk storage device, a flash memory device, or another non-volatile solid-state storage device.

The processor 1010 may include one or more processing units. Optionally, the processor 1010 may integrate an application processor and a modem processor. The application processor mainly processes an operating system, a user interface, an application program or instruction, and the like, and the modem processor mainly processes a wireless communication signal, for example, a baseband processor. It may be understood that the foregoing modem processor may not be integrated into the processor 1010.

The processor 1010 is configured to determine a first physical sidelink feedback channel PSFCH resource and/or a first physical sidelink shared channel PSSCH resource; and/or
the radio frequency unit 1001 is configured to send first information, where the first information is used to indicate the first PSFCH resource.

In the foregoing embodiments, a first terminal determines the first physical sidelink feedback channel PSFCH resource, to avoid a resource occupied or reserved by another terminal; and/or the first terminal sends the first information, and the first information is used to indicate the first PSFCH resource, so that when receiving the first information, a second terminal may perform resource selection based on the resource indicated by the first information, to avoid a conflict with the resource indicated by the first information.

Optionally, the processor 1010 is specifically configured to:

if a PSFCH resource corresponding to a candidate resource in a first candidate resource set meets a target condition, exclude the candidate resource from the first candidate resource set; and and/or
if a candidate PSFCH resource in a second candidate resource set meets the target condition, exclude a candidate resource corresponding to the candidate PSFCH resource from the first candidate resource set; and
determine the first PSSCH resource based on a first candidate resource set obtained through resource exclusion.

Optionally, the processor 1010 is specifically configured to:
determine the first PSSCH resource based on some candidate resources in a first candidate resource set and/or some candidate PSFCH resources in a second candidate resource set.

Optionally, optionally, the processor 1010 is specifically configured to:

if a PSFCH resource corresponding to a candidate resource in a first candidate resource set meets a target condition, exclude the candidate resource from the first candidate resource set; and
the first terminal determines the first PSFCH resource based on a first candidate resource set obtained through resource exclusion.

Optionally, the processor 1010 is specifically configured to:
determine the first PSFCH resource based on some candidate resources in a first candidate resource set.

Optionally, the processor 1010 is specifically configured to:

the first terminal determines a first transmission resource based on the first candidate resource set obtained through resource exclusion; and
the first terminal determines the first PSFCH resource based on the first transmission resource.

Optionally, the processor 1010 is specifically configured to:
the first terminal determines the first PSFCH resource based on the first transmission resource and a correspondence between a transmission resource and a PSFCH resource.

Optionally, the target condition includes at least one of the following:

A first resource detected by the first terminal is an indication resource of the second terminal;
the first resource is a resource indicated by an SCI format 0 or 1;
a result obtained by the first terminal by measuring a reference signal carried in the first resource is larger than a first threshold, where the measurement result of the reference signal includes at least one of the following: a reference signal received power RSRP value, an energy value, and a channel quality value; and
the first resource and/or a reserved resource of the first resource conflict/conflicts with the PSFCH resource corresponding to the candidate resource.

Optionally, the correspondence includes:
If a transmission resource of the first terminal is located in a time unit t, a resource PSFCH sent by a corresponding receiving end is located in a time unit t+k, where t is an integer greater than or equal to 0, and k is a time offset value.

Optionally, the correspondence meets any one of the following conditions:

The first terminal sends data in a time unit t, and indicates a corresponding receiving end to send a PSFCH in a time unit t+k; or
the first terminal sends data in a time unit t, and indicates a time unit t+k.

Optionally, k is determined in at least one of the following manners:
predefining in the protocol, preconfiguring by the network side device, configuring by the network side device, preconfiguring by the first terminal, or configuring by the first terminal; or indicating by the radio resource control RRC, indicating by the media access layer control unit MAC CE, indicating by the downlink control information DCI, or indicating by the sidelink control information SCI.

Optionally, the processor 1010 is further configured to:

if a quantity or a first ratio of candidate resources in the first candidate resource set obtained through resource exclusion is less than a third threshold, increase a first threshold by a first offset value, and/or increase a second threshold by a second offset value, where the second threshold is an RSRP threshold for excluding a candidate resource based on a candidate resource conflict situation, and the first ratio is a ratio of the quantity of candidate resources in the first candidate resource set obtained through resource exclusion to a quantity of candidate resources in the initial first candidate resource set; and
repeatedly perform a step of initializing the first candidate resource set and excluding the candidate resource from the first candidate resource set by the first terminal, until the quantity or the first ratio of the candidate resources in the first candidate resource set is greater than or equal to the third threshold.

Optionally, the processor 1010 is further configured to:

if a quantity or a first ratio of candidate resource pairs in the first candidate resource set obtained through resource exclusion is less than a third threshold, increase a first threshold by a first offset value, and/or increase a second threshold by a second offset value, where the second threshold is an RSRP threshold for excluding a candidate resource based on a candidate resource conflict situation, and the first ratio is a ratio of the quantity of candidate resource pairs in the first candidate resource set obtained through resource exclusion to a quantity of candidate resource pairs in the initial first candidate resource set;
repeatedly perform a step of initializing the first candidate resource set and excluding the candidate resource from the first candidate resource set by the first terminal, until the quantity or the first ratio of the candidate resource pairs in the first candidate resource set is greater than or equal to the third threshold, where
the candidate resource pair includes the candidate resource and the PSFCH resource corresponding to the candidate resource in the first candidate resource set.

Optionally, the candidate resource includes at least one of the following: a physical sidelink shared channel PSSCH resource and a physical sidelink control channel PSCCH resource. The first candidate resource set includes: a candidate resource, or a candidate resource and a PSFCH resource corresponding to the candidate resource.

Optionally, the processor 1010 is specifically configured to:

if a candidate PSFCH resource in a second candidate resource set meets a target condition, exclude the candidate PSFCH resource from the second candidate resource set, and/or the first terminal excludes a candidate resource corresponding to the candidate PSFCH resource from a first candidate resource set; and
determine the first PSFCH resource based on the second candidate resource set and/or the first candidate resource set.

Optionally, the processor 1010 is further configured to:

take, as a candidate resource pair in a third candidate resource set, a candidate resource in the first candidate resource set obtained through resource exclusion and a candidate PSFCH resource that is in the second candidate resource set obtained through resource exclusion and that meets a correspondence; or
take, as a candidate resource in a third candidate resource set, a second candidate resource in the first candidate resource set obtained through resource exclusion, where the second candidate resource is a candidate resource that meets a correspondence with a candidate PSFCH resource in a second candidate resource set obtained through resource exclusion; or

the first terminal excludes a third candidate resource in a first candidate resource set obtained through resource exclusion, to obtain a third candidate resource set, where the third candidate resource is a candidate resource that does not meet a correspondence with any candidate PSFCH resource in a second candidate resource set obtained through resource exclusion.

Optionally, the processor 1010 is specifically configured to:
determine the first PSFCH resource based on the third candidate resource set.
Optionally, the processor 1010 is specifically configured to:
determine the first PSSCH resource based on the third candidate resource set.
Optionally, the processor 1010 is further configured to:

if a quantity of candidate resources or candidate resource pairs in the third candidate resource set is less than a third threshold, increase a first threshold by a first offset value, and repeatedly perform a step of initializing the second candidate resource set and excluding the candidate PSFCH resource from the second candidate resource set by the first terminal, until the quantity of candidate resources or candidate resource pairs in the third candidate resource set is greater than or equal to the third threshold; and/or
if a quantity of candidate resources or candidate resource pairs in the third candidate resource set is less than a third threshold, increase a second threshold by a second offset value, and repeatedly perform a step of initializing the first candidate resource set and excluding the candidate resource from the second candidate resource set by the first terminal, until the quantity of candidate resources or candidate resource pairs in the third candidate resource set is greater than or equal to the third threshold.

Optionally, the processor 1010 is further configured to:

if a quantity or a first ratio of candidate resources in the first candidate resource set obtained through resource exclusion is less than a third threshold, increase a first threshold by a first offset value, and/or increase a second threshold by a second offset value, where the first ratio is a ratio of the quantity of candidate resources in the first candidate resource set obtained through resource exclusion to a quantity of candidate resources in the initial first candidate resource set; and
repeatedly perform a step of initializing the first candidate resource set and excluding the candidate PSFCH resource from the first candidate resource set by the first terminal, until a quantity of candidate PSSCH resources in the first candidate resource set is greater than or equal to the third threshold.

Optionally, the processor 1010 is further configured to:

if a second ratio of candidate resources in the third candidate resource set is less than a third threshold, increase a first threshold by a first offset value, and repeatedly perform a step of initializing the second candidate resource set and excluding the candidate PSFCH resource from the second candidate resource set by the first terminal, until the second ratio of candidate resources in the third candidate resource set is greater than or equal to the third threshold, where the second ratio is a ratio of a quantity of candidate PSSCH resources in the third candidate resource set to a quantity of candidate PSSCH resources in the first candidate resource set; and/or
if a second ratio of candidate resources in the third candidate resource set is less than a third threshold, increase a second threshold by a first offset value, and repeatedly perform a step of initializing the first candidate resource set and excluding the candidate PSSCH resource from the first candidate resource set by the first terminal, until the second ratio of candidate PSSCH resources in the third candidate resource set is greater than or equal to the third threshold.

Optionally, the processor 1010 is further configured to:

if a third ratio of candidate resource pairs in the third candidate resource set is less than a third threshold, increase a first threshold by a first offset value, and repeatedly perform a step of initializing the second candidate resource set and excluding the candidate PSFCH resource from the second candidate resource set by the first terminal, until the third ratio of candidate resource pairs in the third candidate resource set is greater than or equal to the third threshold, where the third ratio is a ratio of a quantity of candidate resource pairs in the third candidate resource set to a quantity of candidate PSFCH resources in the second candidate resource set; and/or
if a third ratio of candidate resource pairs in the third candidate resource set is less than a third threshold, increase a second threshold by a second offset value, and repeatedly perform a step of initializing the first candidate resource set and excluding the candidate resource from the first candidate resource set by the first terminal, until the third ratio of candidate resource pairs in the third candidate resource set is less than is greater than or equal to the third threshold.

Optionally, a range of a selection window corresponding to the first PSFCH resource is [n+$T_1$+k, n+$T_2$+k], where n indicates a packet arrival time, $T_1$ indicates a start location, $T_2$ indicates an end location, and k indicates a time offset value.

Optionally, the first information is indicated by a time gap between initial transmission and retransmission indicator field.

Optionally, the first information is used to indicate at least one of the following:

a PSFCH period;
a time-frequency domain location of a PSFCH resource; and
a time-frequency domain size of the PSFCH resource.

Optionally, a PSFCH sending or receiving location indicated by the first information meets at least one of the following:

The PSFCH sending location is a PSFCH sending location of a period closest to a current transmission time;
the PSFCH receiving location is a PSFCH receiving location of a period closest to a current transmission time;
the PSFCH sending location is a PSFCH sending location of a closest period with a gap greater than a duration threshold from the current transmission time;
the PSFCH receiving location is a PSFCH receiving location of a closest period with a gap greater than a duration threshold from the current transmission time;
the PSFCH sending location is a PSFCH sending location of a random period in a range indicated by the first information; and
the PSFCH receiving location is a PSFCH receiving location of a random period in a range indicated by the first information.

Optionally, the PSFCH sending location or receiving location is determined by a PSFCH period or the start location.

Optionally, the PSFCH period or the start location is indicated by at least one of the following:
predefining in the protocol, preconfiguring by the network side device, configuring by the network side device, preconfiguring by the first terminal, or configuring by the first terminal; or indicating by the radio resource control RRC, indicating by the media access layer control unit MAC CE, indicating by the downlink control information DCI, or indicating by the sidelink control information SCI.

Optionally, in a case that a current transmission time domain location is located at a periodically configured PSFCH sending or receiving location, the processor 1010 is further configured to perform configuration according to at least one of the following:

configuring a retransmission index indicator field as a first preset value;
configuring a time gap between initial transmission and retransmission indicator field as a first preset value; and
configuring a time gap between initial transmission and retransmission indicator field as a PSFCH period.

Optionally, a PSFCH sending location and/or a PSFCH receiving location are dynamically indicated by the first terminal, and at least one of the following is met:

The PSFCH sending location is indicated by a time gap between initial transmission and retransmission indicator field; and
content of the dynamic indication is a first time domain offset value of the PSFCH sending location or the PSFCH receiving location relative to a target time unit. The target time unit includes at least one of the following: a current time unit or a time unit in which the first information is located.

Optionally, the first time domain offset value is greater than or equal to the PSFCH sending and processing time and/or the PSFCH data processing time; or
the first time domain offset value is greater than or equal to M, where M is a predefined, preconfigured, or configured value, and M meets at least one of the following: M is related to an SCS, M is a physical time, or M is a logical time.

Optionally, the processor 1010 is further configured to:

when performing revaluation or preemption check, the first terminal determines whether a PSFCH resource corresponding to a selected data sending resource is preempted or reserved by the second terminal; and

if the PSFCH resource corresponding to the selected data sending resource is preempted or reserved by the second terminal, perform resource reselection for data transmission.

An embodiment of this application further provides a second terminal, including a processor and a communication interface. The communication interface is configured to obtain first information. The first information is sent by a first terminal, and the first information is used to indicate a target resource. The processor is configured to exclude the target resource from target candidate resources based on the target resource indicated by the first information. The embodiment of the second terminal corresponds to the method embodiment of the second terminal side, and implementation processes and implementations of the method embodiment can be applied to the embodiment of the second terminal, and the same technical effect can be achieved.

An embodiment of this application further provides a readable storage medium. The readable storage medium stores programs and instructions. When the programs and instructions are executed by a processor, the processes of embodiments of the sidelink resource determining method is implemented, and the same technical effect can be achieved. To avoid repetition, details are not described herein again.

The processor is the processor in the terminal described in the foregoing embodiments. The readable storage medium includes a computer-readable storage medium, for example, a computer read-only memory ROM, a random access memory RAM, a magnetic disk, or an optical disk.

An embodiment of this application further provides chip. The chip includes a processor and a communication interface. The communication interface is coupled with the processor, and the processor is used to run programs or instructions, to implement the processes of embodiments of the sidelink resource determining method, and the same technical effect can be achieved. To avoid repetition, details are not described herein again.

It should be understood that the chip in embodiments of this application may also be referred to as a system level chip, a system chip, a chip system, system-on-chip, or the like.

An embodiment of this application further provides a computer program/program product. The computer program/program product is stored in a storage medium. The computer program/program product is executed by at least one processor, to implement the processes of embodiments of the sidelink resource determining method, and the same technical effect can be achieved. To avoid repetition, details are not described herein again.

An embodiment of this application further provides a communication system, including: a first terminal and a second terminal. The first terminal may be configured to perform the steps of the sidelink resource determining method described above, and the second terminal may be configured to perform the steps of the sidelink resource determining method described above.

Optionally, the communication system may further include a network side device.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. Further, it should be noted that the scope of the method and the apparatus in embodiments of this application is not limited to performing functions in the order shown or discussed, but may also include performing functions in a substantially simultaneous manner or in reverse order depending on the functions involved, for example, the described method may be performed in a different order than described, and various steps may be added, omitted, or combined. In addition, features described with reference to specific examples can be combined in other examples.

According to the descriptions in the foregoing implementations, a person skilled in the art may clearly learn that the method according to the foregoing embodiment may be implemented by relying on software and a commodity hardware platform or by using hardware. Based on such an understanding, the technical solutions of this application essentially, or the part contributing to the conventional technology, may be presented in the form of a computer software product. The computer software product is stored in a storage medium (for example, a ROM/RAM, a magnetic disk, or an optical disc) including several instructions to enable a terminal (which may be a mobile phone, a computer, a server, a network device, or the like) to perform the methods described in embodiments of this application.

Embodiments of this application have been described above with reference to the accompanying drawings. This application is not limited to the specific embodiments described above, and the specific embodiments described above are merely exemplary and not limitative. Persons of ordinary skill in the art may make various variations under the teaching of this application without departing from the spirit of this application and the protection scope of the claims, and such variations shall all fall within the protection scope of this application.

**Claims**

1. A sidelink resource determining method, comprising:

   determining, by a first terminal, a first physical sidelink feedback channel PSFCH resource and/or a first physical sidelink shared channel PSSCH resource; and/or
   sending, by the first terminal, first information, wherein the first information is used to indicate the first PSFCH resource.

2. The sidelink resource determining method according to claim 1, wherein the determining, by a first terminal, a first physical sidelink shared channel PSSCH resource comprises:

   if a PSFCH resource corresponding to a candidate resource in a first candidate resource set meets a target condition, excluding, by the first terminal, the candidate resource from the first candidate resource set; and/or
   if a candidate PSFCH resource in a second candidate resource set meets the target condition, excluding, by the first terminal, a candidate resource corresponding to the candidate PSFCH resource from the first candidate resource set; and
   determining, by the first terminal, the first PSSCH resource based on a first candidate resource set obtained through resource exclusion.

3. The sidelink resource determining method according to claim 1, wherein the determining, by a first terminal, a first physical sidelink shared channel PSSCH resource comprises:
   determining, by the first terminal, the first PSSCH resource based on some candidate resources in a first candidate resource set and/or some candidate PSFCH resources in a second candidate resource set.

4. The sidelink resource determining method according to claim 1, wherein the determining, by a first terminal, a first physical sidelink feedback channel PSFCH resource comprises:

   if a PSFCH resource corresponding to a candidate resource in a first candidate resource set meets a target condition, excluding, by the first terminal, the candidate resource from the first candidate resource set; and
   determining, by the first terminal, the first PSFCH resource based on a first candidate resource set obtained through resource exclusion.

5. The sidelink resource determining method according to claim 1, wherein the determining, by a first terminal, a first physical sidelink feedback channel PSFCH resource comprises:
   determining, by the first terminal, the first PSFCH resource based on some candidate resources in a first candidate resource set.

6. The sidelink resource determining method according to claim 5, wherein the determining, by the first terminal, the first PSFCH resource based on a first candidate resource set obtained through resource exclusion comprises:

   determining, by the first terminal, a first transmission resource based on the first candidate resource set obtained through resource exclusion; and
   determining, by the first terminal, the first PSFCH resource based on the first transmission resource.

7. The sidelink resource determining method according to claim 6, wherein the determining, by the first terminal, the first PSFCH resource based on the first transmission resource comprises:
   determining, by the first terminal, the first PSFCH resource based on the first transmission resource and a correspondence between a transmission resource and a PSFCH resource.

8. The sidelink resource determining method according to claim 2 or 4, wherein the target condition comprises at least one of the following:

   a first resource detected by the first terminal is an indication resource of a second terminal;
   the first resource is a resource indicated by an SCI format 0 or 1;
   a result obtained by the first terminal by measuring a reference signal carried in the first resource is larger than a first threshold, wherein the measurement result of the reference signal comprises at least one of the following:
   a reference signal received power RSRP value, an energy value, and a channel quality value; and

the first resource and/or a reserved resource of the first resource conflict/conflicts with the PSFCH resource corresponding to the candidate resource.

9. The sidelink resource determining method according to any one of claims 2 to 5, wherein the correspondence comprises:
if a transmission resource of the first terminal is located in a time unit t, a resource PSFCH sent by a corresponding receiving end is located in a time unit t+k, wherein t is an integer greater than or equal to 0, and k is a time offset value.

10. The sidelink resource determining method according to any one of claims 2 to 5, wherein the correspondence meets any one of the following cases:

the first terminal sends data in a time unit t, and indicates a corresponding receiving end to send a PSFCH in a time unit t+k; or
the first terminal sends data in a time unit t, and indicates a time unit t+k.

11. The sidelink resource determining method according to claim 9 or 10, wherein
k is determined in at least one of the following manners:
predefining in a protocol, preconfiguring by a network side device, configuring by the network side device, preconfiguring by the first terminal, or configuring by the first terminal; or indicating by radio resource control RRC, indicating by a media access layer control unit MAC CE, indicating by downlink control information DCI, or indicating by sidelink control information SCI.

12. The sidelink resource determining method according to any one of claims 2 to 7, wherein the method further comprises:

if a quantity or a first ratio of candidate resources in the first candidate resource set obtained through resource exclusion is less than a third threshold, increasing a first threshold by a first offset value, and/or increasing a second threshold by a second offset value, wherein the second threshold is an RSRP threshold for excluding a candidate resource based on a candidate resource conflict situation, and the first ratio is a ratio of the quantity of candidate resources in the first candidate resource set obtained through resource exclusion to a quantity of candidate resources in the initial first candidate resource set; and
repeatedly performing a step of initializing the first candidate resource set and excluding the candidate resource from the first candidate resource set by the first terminal, until the quantity or the first ratio of the candidate resources in the first candidate resource set is greater than or equal to the third threshold.

13. The sidelink resource determining method according to any one of claims 2 to 7, wherein the method further comprises:

if a quantity or a first ratio of candidate resource pairs in the first candidate resource set obtained through resource exclusion is less than a third threshold, increasing a first threshold by a first offset value, and/or increasing a second threshold by a second offset value, wherein the second threshold is an RSRP threshold for excluding a candidate resource based on a candidate resource conflict situation, and the first ratio is a ratio of the quantity of candidate resource pairs in the first candidate resource set obtained through resource exclusion to a quantity of candidate resource pairs in the initial first candidate resource set; and
repeatedly performing a step of initializing the first candidate resource set and excluding the candidate resource from the first candidate resource set by the first terminal, until the quantity or the first ratio of the candidate resource pairs in the first candidate resource set is greater than or equal to the third threshold, wherein
the candidate resource pair is the candidate resource and the PSFCH resource corresponding to the candidate resource in the first candidate resource set.

14. The sidelink resource determining method according to any one of claims 2 to 7, wherein the candidate resource comprises at least one of the following: a physical sidelink shared channel PSSCH resource and a physical sidelink control channel PSCCH resource; and the first candidate resource set comprises: a candidate resource, or a candidate resource and a PSFCH resource corresponding to the candidate resource.

15. The sidelink resource determining method according to claim 1, wherein the determining, by a first terminal, a first physical sidelink feedback channel PSFCH resource comprises:

if a candidate PSFCH resource in a second candidate resource set meets a target condition, excluding, by the first terminal, the candidate PSFCH resource from the second candidate resource set, and/or excluding, by the first terminal, a candidate resource corresponding to the candidate PSFCH resource from a first candidate resource set; and

determining, by the first terminal, the first PSFCH resource based on the second candidate resource set and/or the first candidate resource set.

16. The sidelink resource determining method according to claim 1, wherein the determining, by a first terminal, a first physical sidelink feedback channel PSFCH resource comprises:

determining, by the first terminal, the first PSFCH resource based on a candidate PSFCH resource in a second candidate resource set and/or a candidate resource in a first candidate resource set.

17. The sidelink resource determining method according to claim 2, 15, or 16, wherein the method further comprises:

taking, by the first terminal as a candidate resource pair in a third candidate resource set, a candidate resource in a first candidate resource set obtained through resource exclusion and a candidate PSFCH resource that is in the second candidate resource set obtained through resource exclusion and that meets a correspondence; or

taking, by the first terminal as a candidate resource in a third candidate resource set, a second candidate resource in the first candidate resource set obtained through resource exclusion, wherein the second candidate resource is a candidate resource that meets a correspondence with a candidate PSFCH resource in a second candidate resource set obtained through resource exclusion; or

excluding, by the first terminal, a third candidate resource in a first candidate resource set obtained through resource exclusion, to obtain a third candidate resource set, wherein the third candidate resource is a candidate resource that does not meet a correspondence with any candidate PSFCH resource in a second candidate resource set obtained through resource exclusion;

the determining, by the first terminal, the first PSFCH resource based on the second candidate resource set and/or the first candidate resource set comprises:

determining, by the first terminal, the first PSFCH resource based on the third candidate resource set; and/or

the determining the first PSSCH resource comprises:

determining, by the first terminal, the first PSSCH resource based on the third candidate resource set;

18. The sidelink resource determining method according to claim 17, wherein the method further comprises:

if a quantity of candidate resources or candidate resource pairs in the third candidate resource set is less than a third threshold, increasing a first threshold by a first offset value, and repeatedly performing a step of initializing the second candidate resource set and excluding the candidate PSFCH resource from the second candidate resource set by the first terminal, until the quantity of candidate resources or candidate resource pairs in the third candidate resource set is greater than or equal to the third threshold; and/or

if a quantity of candidate resources or candidate resource pairs in the third candidate resource set is less than a third threshold, increasing a second threshold by a second offset value, and repeatedly performing a step of initializing the first candidate resource set and excluding the candidate resource from the second candidate resource set by the first terminal, until the quantity of candidate resources or candidate resource pairs in the third candidate resource set is greater than or equal to the third threshold.

19. The sidelink resource determining method according to claim 17, wherein the method further comprises:

if a quantity or a first ratio of candidate resources in the first candidate resource set obtained through resource exclusion is less than a third threshold, increasing a first threshold by a first offset value, and/or increasing a second threshold by a second offset value, wherein the first ratio is a ratio of the quantity of candidate resources in the first candidate resource set obtained through resource exclusion to a quantity of candidate resources in the initial first candidate resource set; and

repeatedly performing a step of initializing the first candidate resource set and/or the second candidate resource set and excluding the candidate PSFCH resource from the first candidate resource set and/or the second candidate resource set by the first terminal, until a quantity of candidate PSSCH resources in the first candidate resource set is greater than or equal to the third threshold.

20. The sidelink resource determining method according to claim 17, wherein the method further comprises:

if a second ratio of candidate resources in the third candidate resource set is less than a third threshold, increasing a first threshold by a first offset value, and repeatedly performing a step of initializing the second candidate resource set and excluding the candidate PSFCH resource from the second candidate resource set by the first terminal, until the second ratio of candidate resources in the third candidate resource set is greater than or equal to the third threshold, wherein the second ratio is a ratio of a quantity of candidate PSSCH resources in the third candidate resource set to a quantity of candidate PSSCH resources in the first candidate resource set; and/or

if a second ratio of candidate resources in the third candidate resource set is less than a third threshold, increasing a second threshold by a first offset value, and repeatedly performing a step of initializing the first candidate resource set and excluding the candidate PSSCH resource from the first candidate resource set by the first terminal, until the second ratio of candidate PSSCH resources in the third candidate resource set is greater than or equal to the third threshold.

21. The sidelink resource determining method according to claim 17, wherein the method further comprises:

if a third ratio of candidate resource pairs in the third candidate resource set is less than a third threshold, increasing a first threshold by a first offset value, and repeatedly performing a step of initializing the second candidate resource set and excluding the candidate PSFCH resource from the second candidate resource set by the first terminal, until the third ratio of candidate resource pairs in the third candidate resource set is greater than or equal to the third threshold, wherein the third ratio is a ratio of a quantity of candidate resource pairs in the third candidate resource set to a quantity of candidate PSFCH resources in the second candidate resource set; and/or

if a third ratio of candidate resource pairs in the third candidate resource set is less than a third threshold, increasing a second threshold by a second offset value, and repeatedly performing a step of initializing the first candidate resource set and excluding the candidate resource from the first candidate resource set by the first terminal, until the third ratio of candidate resource pairs in the third candidate resource set is less than is greater than or equal to the third threshold.

22. The sidelink resource determining method according to claim 1, wherein
a range of a selection window corresponding to the first PSFCH resource is $[n+T_1+k, n+T_2+k]$, wherein n indicates a packet arrival time, $T_1$ indicates a start location, $T_2$ indicates an end location, and k indicates a time offset value.

23. The sidelink resource determining method according to claim 1 or 22, wherein
the first information is indicated by a time gap between initial transmission and retransmission indicator field.

24. The sidelink resource determining method according to claim 1 or 22, wherein the first information is used to indicate at least one of the following:

a PSFCH period;
a time-frequency domain location of a PSFCH resource; and
a time-frequency domain size of the PSFCH resource.

25. The sidelink resource determining method according to claim 1 or 22, wherein
a PSFCH sending or receiving location indicated by the first information meets at least one of the following:

the PSFCH sending location is a PSFCH sending location of a period closest to a current transmission time;
the PSFCH receiving location is a PSFCH receiving location of a period closest to a current transmission time;
the PSFCH sending location is a PSFCH sending location of a closest period with a gap greater than a duration threshold from the current transmission time;
the PSFCH receiving location is a PSFCH receiving location of a closest period with a gap greater than a duration threshold from the current transmission time;
the PSFCH sending location is a PSFCH sending location of a random period in a range indicated by the first information; and
the PSFCH receiving location is a PSFCH receiving location of a random period in a range indicated by the first information.

26. The sidelink resource determining method according to claim 25, wherein
the PSFCH sending location or receiving location is determined by a PSFCH period or the start location.

**27.** The sidelink resource determining method according to claim 26, wherein
the PSFCH period or the start location is indicated by at least one of the following:
predefining in the protocol, preconfiguring by the network side device, configuring by the network side device, preconfiguring by the first terminal, or configuring by the first terminal; or indicating by the radio resource control RRC, indicating by the media access layer control unit MAC CE, indicating by the downlink control information DCI, or indicating by the sidelink control information SCI.

**28.** The sidelink resource determining method according to any one of claims 1 to 21, wherein, in a case that a current transmission time domain location is located at a periodically configured PSFCH sending or receiving location, configuration is performed according to at least one of the following:

configuring a retransmission index indicator field as a first preset value;
configuring a time gap between initial transmission and retransmission indicator field as a first preset value; and
configuring a time gap between initial transmission and retransmission indicator field as a PSFCH period.

**29.** The sidelink resource determining method according to any one of claims 1 to 21, wherein
a PSFCH sending location and/or a PSFCH receiving location are dynamically indicated by the first terminal, and at least one of the following is met:

the PSFCH sending location is indicated by a time gap between initial transmission and retransmission indicator field; and
content of the dynamic indication is a first time domain offset value of the PSFCH sending location or the PSFCH receiving location relative to a target time unit; and the target time unit comprises at least one of the following: a current time unit or a time unit in which the first information is located.

**30.** The sidelink resource determining method according to claim 29, wherein

the first time domain offset value is greater than or equal to a PSFCH sending and processing time; or
the first time domain offset value is greater than or equal to M, wherein M is a predefined, preconfigured, or configured value, and M meets at least one of the following: M is related to an SCS, M is a physical time, or M is a logical time.

**31.** The sidelink resource determining method according to any one of claims 1 to 18, wherein the method further comprises:

when performing revaluation or preemption check, determining, by the first terminal, whether a PSFCH resource corresponding to a selected data sending resource is preempted or reserved by the second terminal; and
if the PSFCH resource corresponding to the selected data sending resource is preempted or reserved by the second terminal, performing resource reselection for data transmission.

**32.** A sidelink resource determining method, comprising:

obtaining, by a second terminal, first information, wherein the first information is sent by a first terminal, and the first information is used to indicate a target resource; and
excluding, by the second terminal, the target resource from target candidate resources based on the target resource indicated by the first information.

**33.** The sidelink resource determining method according to claim 32, wherein the method further comprises:
adjusting, by the second terminal, a priority and/or an RSRP threshold corresponding to the target resource, wherein the RSRP threshold is an RSRP threshold of the target resource that is excluded based on a resource conflict situation.

**34.** A sidelink resource determining apparatus, comprising:

a processing module, configured to determine a first physical sidelink feedback channel PSFCH resource and/or a first physical sidelink shared channel PSSCH resource; and/or
a transmitting module, configured to send first information, wherein the first information is used to indicate the first PSFCH resource.

**35.** A sidelink resource determining apparatus, comprising:

an obtaining module, configured to obtain first information, wherein the first information is sent by a first terminal, and the first information is used to indicate a target resource; and
a processing module, configured to exclude the target resource from target candidate resources based on the target resource indicated by the first information.

**36.** A first terminal, comprising a memory and a processor, wherein the memory stores programs or instructions that are capable of being run on the processor, and when the programs or instructions are executed by the processor, the steps of the sidelink resource determining method according to any one of claims 1 to 31 is implemented.

**37.** A second terminal, comprising a memory and a processor, wherein the memory stores programs or instructions that are capable of being run on the processor, and when the programs or instructions are executed by the processor, the steps of the sidelink resource determining method according to any one of claims 32 to 33 is implemented.

**38.** A readable storage medium, wherein the readable storage medium stores programs or instructions, and when the programs or instructions are executed by a processor, the steps of the sidelink resource determining method according to any one of claims 1 to 31 or the sidelink resource determining method according to any one of claims 32 to 33 is implemented.

12

Network side device

11

11

Terminal

Terminal

## FIG. 1

Network
side device

Terminal          Sidelink          Terminal

## FIG. 2

A first terminal determines a first physical sidelink feedback channel
PSFCH resource and/or a first physical sidelink shared channel PSSCH
resource; and/or the first terminal sends first information, where the first
information is used to indicate the first PSFCH resource

101

## FIG. 3

Timeslot
index    0  1  2  3  4  5  6  7  8  9  10 11 12 13 14 15

PSFCH    NR reservation

FIG. 4

W2                          W1

n-x                n    n+$T_1$            n+$T_2$         t

FIG. 5

Determine a PSSCH
resource selection
window

↓

Determine a detection
window

↓

Determine a first RSRP
threshold and a second
RSRP threshold

↓

Initialize a candidate
resource set $S_A$

Exclude a PSSCH
resource that meets
a preset condition

Exclude a PSSCH resource
corresponding to a PSFCH resource
that meets a target condition

② No

① No

Determine
whether a quantity or a ratio
of resources meets a third
threshold

Yes

↓

Report a candidate resource
set $S_A$ obtained through
resource exclusion

FIG. 6

Determine a
PSSCH resource
selection window

Determine a
PSFCH resource
selection window

Determine a
resource detection
window

Determine a
resource detection
window

Determine a first
RSRP threshold

Determine a
second RSRP
threshold

Initialize a
candidate resource
set $S_A$

Initialize a
candidate resource
set $S_B$

Exclude a PSSCH
resource that meets
a preset condition

Exclude a PSFCH
resource that meets
a target condition

②     Determine
whether a quantity or a ratio
of resource pairs meets a third
threshold     ①

No             No

Yes

Report a candidate
resource set $S_C$

FIG. 7

Determine a
PSSCH resource
selection window

↓

Determine a
resource detection
window

Determine a first
RSRP threshold

Determine a
second RSRP
threshold

↓

Initialize a
candidate resource
set $S_A$

Initialize a
candidate resource
set $S_B$

↓

Exclude a PSSCH
resource that meets
a preset condition

Exclude a PSFCH
resource that meets
a target condition

② Determine
whether a quantity or a ratio
of resource pairs meets a third
threshold ①

No                                No

Yes

Report a candidate
resource set $S_C$

**FIG. 8**

First
terminal

Second
terminal

101: Send first information, where the first
information is used to indicate a target
resource

202: The second terminal excludes the
target resource from target candidate
resources based on the target resource
indicated by the first information

**FIG. 9**

A second terminal obtains first information, where the first information is sent by a first terminal, and the first information is used to indicate a target resource

201

The second terminal excludes the target resource from target candidate resources based on the target resource indicated by the first information

202

FIG. 10

Sidelink resource determining apparatus

210

211

| Processing module | Sending module |

FIG. 11

Sidelink resource determining apparatus

220

221

| Obtaining module | Processing module |

FIG. 12

1300

Communication device

1301 — Processor ⟷ Memory — 1302

## FIG. 13

1000

1001 — Radio frequency unit

Network module — 1002

1010 —

Memory

1009 — Application

Operating system

1008 — Interface unit

1007 —

User input unit

10071 — Touch panel

10072 — Another input device

Processor

Audio output unit — 1003

1004

Input unit

Graphics processing unit — 10041

Microphone — 10042

1006

Display unit — 10061

Display panel

Sensor — 1005

## FIG. 14

## INTERNATIONAL SEARCH REPORT

| International application No. |
|---|
| **PCT/CN2022/133442** |

**A.    CLASSIFICATION OF SUBJECT MATTER**

H04W 74/00(2009.01)i

According to International Patent Classification (IPC) or to both national classification and IPC

**B.    FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; ENTXTC; WPABSC; VEN; 3GPP: 侧, 副, 直通, 链路, 控制信息, 指示, 物理侧行反馈信道, 数据, 冲突, 碰撞, side, secondary, pass through, link, SL, control information, SCI, indication, PSFCH, data, collision, conflict

**C.    DOCUMENTS CONSIDERED TO BE RELEVANT**

| Category* | Citation of document, with indication, where appropriate, of the relevant passages | Relevant to claim No. |
|---|---|---|
| X | CN 113273120 A (PANASONIC INTELLECTUAL PROPERTY CORPORATION OF AMERICA) 17 August 2021 (2021-08-17) description, paragraphs [0042]-[0226], and figures 1-25 | 1, 32, 34-38 |
| Y | CN 113273120 A (PANASONIC INTELLECTUAL PROPERTY CORPORATION OF AMERICA) 17 August 2021 (2021-08-17) description, paragraphs [0042]-[0226], and figures 1-25 | 2-31, 33 |
| Y | ""R1-2111037 Remaining issues on mode-2 enhancements"" *3GPP tsg_ran\wg1_rl1*, 05 November 2021 (2021-11-05), sections 2-4 | 2-31, 33 |
| Y | ""R1-2108999 Discussion on mode-2 enhancements"" *3GPP tsg_ran\wg1_rl1*, 01 October 2021 (2021-10-01), sections 2-4 | 2-31, 33 |
| A | US 2021099994 A1 (KT CORP.) 01 April 2021 (2021-04-01) entire document | 1-38 |
| A | WO 2020096280 A1 (INNOVATIVE TECHNOLOGY LAB CO., LTD.) 14 May 2020 (2020-05-14) entire document | 1-38 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 January 2023** | **20 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/133442**

| C. | DOCUMENTS CONSIDERED TO BE RELEVANT | |
|---|---|---|
| Category* | Citation of document, with indication, where appropriate, of the relevant passages | Relevant to claim No. |
| A | CN 112640499 A (BEIJING XIAOMI MOBILE SOFTWARE CO., LTD.) 09 April 2021 (2021-04-09)<br>entire document | 1-38 |

Form PCT/ISA/210 (second sheet) (January 2015)

**INTERNATIONAL SEARCH REPORT**
Information on patent family members

International application No.

**PCT/CN2022/133442**

| Patent document cited in search report | | | Publication date (day/month/year) | Patent family member(s) | | | Publication date (day/month/year) |
|---|---|---|---|---|---|---|---|
| CN | 113273120 | A | 17 August 2021 | None | | | |
| US | 2021099994 | A1 | 01 April 2021 | None | | | |
| WO | 2020096280 | A1 | 14 May 2020 | KR | 20200054034 | A | 19 May 2020 |
| CN | 112640499 | A | 09 April 2021 | None | | | |

Form PCT/ISA/210 (patent family annex) (January 2015)

**REFERENCES CITED IN THE DESCRIPTION**

**Patent documents cited in the description**

- CN 202111389712